# FASCICULE DE BREVET EUROPEEN

(11) **EP 0 616 665 B1**
(45) Date de publication et mention de la délivrance du brevet: **15.04.1998**
(21) Numéro de dépôt: 93920917.7
(22) Date de dépôt: 22.09.1993
(51) Int. Cl.: F16C 32/04, H02K 7/102

(54) **DISPOSITIF A PALIER MAGNETIQUE ET A BUTEE MECANIQUE POUR LE POSITIONNEMENT D'UN CORPS TOURNANT PAR RAPPORT A UN CORPS STATORIQUE**
MAGNETISCHE LAGERVORRICHTUNG UND MECHANISCHER ANSCHLAG ZUM POSITIONIEREN EINESDREHKÖRPERS GEGENÜBER EINEM STATOR
MAGNETIC BEARING AND MECHANICAL STOP DEVICE FOR POSITIONING A ROTATING BODY IN RELATION TO A STATOR BODY

(30) Priorité: 22.09.1992 FR 9211261
(43) Date de publication de la demande: 28.09.1994
(73) Titulaire: AEROSPATIALE Société Nationale Industrielle, 75781 Paris Cédex 16 (FR)
(72) Inventeur: BERNUS, Christophe, F-75018 Paris (FR)
(74) Mandataire: Santarelli, Luc
(86) Numéro de dépôt international: FR9300921
(87) Numéro de publication internationale: WO9407044

(56) Documents cités:
- EP-A- 0 145 837
- DE-A- 3 322 495
- DE-U- 1 763 473
- FR-A- 635 653

## Description

L'invention concerne le positionnement par palier magnétique d'un corps tournant par rapport à un corps statorique, et se préoccupe plus particulièrement du maintien mécanique qui est nécessaire en pratique préalablement à la mise en service du palier magnétique et/ou pour préserver le palier magnétique vis à vis des vibrations d'amplitudes excessives susceptibles de le dégrader. L'invention se place de préférence, mais non exclusivement, dans le cadre d'une application spatiale (vide poussé, environnement hostile notamment du point de vue thermique, gravité faible voire négligeable).

Ainsi qu'on le sait, il n'est pas possible de concevoir un palier magnétique qui puisse être passif (avec seule mise en oeuvre d'aimants permanents) aussi bien axialement que selon au moins deux directions transversales. Il est toujours nécessaire de prévoir, sur un axe au moins, un asservissement actif, mettant en oeuvre un actionneur électromagnétique en pratique constitué d'une bobine alimentée en sorte de générer dans des entrefers des flux correcteurs induisant une force de correction déterminée en fonction de signaux de mesure fournis par des capteurs de position ou de vitesse, et de valeurs de consignes de position le long dudit axe d'asservissement actif.

En l'absence de tout courant appliqué, le corps tournant s'éloigne de sa position d'équilibre instable parallèlement à l'axe suivant lequel on cherche à réaliser l'asservissement. C'est pour cela qu'il est utile, pour éviter notamment tout éloignement excessif, de prévoir des butées mécaniques contre lesquelles le corps tournant vient porter en l'absence de courant dans la boucle d'asservissement. Il est pour cela utile de prévoir dans la logique d'asservissement une logique spécifiquement dédiée à la phase de décollage du corps tournant vis à vis des butées, lors de la mise en service de la boucle d'asservissement.

On connaît deux grandes catégories de palier magnétique, à savoir les paliers à contrôle axial actif et à contrôle radial passif et les paliers à contrôle axial passif et à contrôle radial actif. Dans le premier cas, où le corps tournant est en équilibre instable parallèlement à l'axe de rotation, il est connu de prévoir des butées axiales éventuellement mobiles en sorte de pouvoir caler axialement ce corps tournant. Dans le deuxième cas, où le corps tournant est en équilibre instable transversalement à l'axe de rotation, il est connu soit de laisser ce corps tournant s'écarter de sa position radiale de consigne habituelle et venir porter radialement contre des butées, soit, comme précédemment, de maintenir le corps tournant par calage axial.

Les types de maintien mécanique envisagés ci-dessus ne peuvent pas toujours être implantés, soit pour des raisons d'encombrement axial limité, soit en raison de leur insuffisance à maintenir fermement le corps tournant en présence de vibrations importantes, par exemple du type de celles générées dans un satellite lors de son lancement à partir du sol ou d'une mise à feu temporaire de tuyères de correction d'orbite.

L'invention a pour objet de pallier les inconvénients précités, et donc d'assurer un maintien ferme du corps tournant en cas de contrôle radial actif (voire en cas de contrôle axial en choisissant des coefficients de frottement appropriés), de préférence dans la position d'équilibre de consigne de ce corps tournant, et ce de façon simple et fiable, en sorte d'éviter de préférence l'usage d'une logique de décollage complexe, et en permettant un fonctionnement réversible des éléments de maintien de manière à en permettre un contrôle au sol avant lancement.

L'invention propose à cet effet, un dispositif de positionnement d'un corps tournant mobile autour d'un axe par rapport à un corps statorique comportant un palier magnétique et un dispositif de verrouillage/déverrouillage, caractérisé en ce que ce dispositif de verrouillage/déverrouillage comporte une pluralité de pinces munies de patins de serrage adaptés à venir porter radialement sur un arbre du corps tournant, ces pinces étant articulées sur le corps statorique autour de pions axiaux situés à distance de l'axe de rotation et régulièrement répartis angulairement autour de cet axe de rotation, en étant mobiles en pivotement autour de ces pions axiaux, sous l'action d'une pièce de manoeuvre mobile, entre une configuration de déverrouillage dans laquelle les patins de serrage sont à une distance maximale de l'axe et une configuration de verrouillage dans laquelle ces patins sont à une distance minimale de l'axe propre à induire un serrage radial de l'arbre.

La mise en oeuvre de pinces articulées munies de patins de serrage adaptés à venir porter sur une surface solidaire d'un arbre, ces pinces étant montées pivotantes entre une configuration active et une configuration passive est en fait connue en soi dans le domaine du freinage par exemple d'après les documents DE-U-1.763.473 et FR-A-635.653.

Selon des dispositions préférées de l'invention éventuellement combinées :
- la pièce de manoeuvre est une bague annulaire centrée sur l'axe ayant un débattement angulaire donné, comportant autant de tétons axiaux qu'il y a de pinces, chaque pince comportant une lumière circonférentielle traversée par l'un des tétons, les bords radialement interne et externe de cette lumière formant des rampes pour les tétons, cette lumière comportant une première extrémité circonférentielle située à une distance minimale de l'axe de rotation et une seconde extrémité circonférentielle située à une distance maximale de l'axe de rotation, grâce à quoi, lorsque les tétons de la bague sont dans les premières extrémités circonférentielles des lumières, les pinces sont dans leurs configurations de déverrouillage et lorsque les tétons de la bague sont dans les secondes extrémités circonférentielles des lumières, les pinces sont dans leurs configurations de verrouillage,
- les tétons axiaux sont chacun munis de roulements adaptés à rouler sur les bords radialement internes ou externes des lumières circonférentielles,
- les patins de serrage sont sollicités radialement vers l'axe par des éléments élastiques agissant sur la bague,
- la bague de manoeuvre est reliée à une portion statorique par une pluralité d'éléments élastiques globalement radiaux, travaillant en compression, mobiles dans un plan transversal à l'axe de part et d'autre d'une configuration instable dans laquelle ils sont orientés radialement, entre deux configurations extrêmes stables pour lesquelles les pinces sont en leurs configurations de verrouillage ou de déverrouillage, respectivement,
- la bague est actionnée en débattement angulaire par un moteur-couple comportant un induit solidaire de la bague et un inducteur lié au corps statorique,
- l'induit a globalement la forme d'un disque plat et l'inducteur est formé d'au moins une paire d'armatures magnétiques circonférentiellement disjoints coiffant sans contact la périphérie radialement externe de ce disque et présentant sur des secteurs angulaires disjoints deux rebords formant des saillies axiales axialement en regard au travers du disque, au moins une portion de couronne à aimantation permanente coplanaire à l'axe étant ménagée dans chaque armature en sorte de générer un flux magnétique se refermant axialement entre les rebords au travers de l'induit, cet induit comportant au moins un bobinage plan, avec une entrée et une sortie, formé de brins en arc de cercle concentriques et centrés sur l'axe et de brins radiaux raccordant les brins en arc de cercle en sorte de former au moins un ensemble de spires en forme de banane emboîtées les unes dans les autres mais raccordées en série, les brins radiaux de chaque bobinage étant regroupés en au moins une paire de faisceaux formés de brins adjacents mais disjoints tels que, lorsqu'un courant est appliqué entre l'entrée et la sortie du bobinage, tous les brins radiaux d'un même faisceau soient parcourus par des courants de même sens radial, chacun des faisceaux étant disposé axialement entre les rebords d'une armature respective, le sens axial du flux traversant l'induit entre les rebords de chaque armature étant choisi en sorte que, lorsqu'un courant est appliqué entre l'entrée et la sortie du bobinage, l'interaction entre les courants circulant dans les brins des faisceaux avec les flux magnétiques axiaux génère sur l'induit des couples de même sens, l'amplitude angulaire du débattement étant définie par la différence entre les amplitudes angulaires des paires de rebords et des faisceaux de brins radiaux,
- ladite portion de couronne à aimantation permanente de chaque armature constitue l'un des rebords de cette armature, cette portion de couronne étant à aimantation permanente axiale,
- chaque rebord de chaque armature est constitué d'une portion de couronne à aimantation permanente axiale,
- ce moteur comporte une seule paire d'armatures, diamétralement opposées et une seule paire de faisceaux par bobinage, diamétralement opposés,
- l'amplitude angulaire de chaque armature est comprise entre 90° et 170°,
- l'amplitude angulaire de chaque faisceau est inférieure à 30° environ,
- l'induit est formé de plusieurs bobinages montés en série ménagés en couches axialement superposées, électriquement isolées les unes des autres, l'entrée de chaque bobinage étant toutefois connectée à la sortie du bobinage précédent, et les faisceaux des bobinages, dont les brins sont parcourus à tout instant par des courants de même sens radial, étant superposés axialement,
- l'induit est formé de 2 à 10 couches de bobinages,
- les bobinages sont des pistes de circuits imprimés,
- le corps tournant est commandé en rotation à l'intérieur d'un débattement angulaire inférieur à 180° par un moteur de commande en débattement angulaire comportant un induit ayant globalement la forme d'un disque plat tournant par rapport à un inducteur formé d'au moins une paire d'armatures magnétiques circonférentiellement disjoints coiffant sans contact la périphérie radialement externe de ce disque et présentant sur des secteurs angulaires disjoints deux rebords formant des saillies axiales axialement en regard au travers du disque, au moins une portion de couronne à aimantation permanente coplanaire à l'axe étant ménagée dans chaque armature en sorte de générer un flux magnétique se refermant axialement entre les rebords au travers de l'induit, cet induit comportant au moins un bobinage plan, avec une entrée et une sortie, formé de deux brins en arc de cercle concentriques et centrés sur l'axe et de brins radiaux raccordant les brins en arc de cercle en sorte de former au moins une paire d'ensembles montés en série de spires en forme de banane emboîtées les unes dans les autres mais raccordées en série, les brins radiaux de chaque bobinage étant regroupés en au moins une paire de faisceaux de brins adjacents mais disjoints tels que, lorsqu'un courant est appliqué entre l'entrée et la sortie du bobinage, tous les brins radiaux d'un même faisceau soient parcourus par des courants de même sens radial, chacun des faisceaux étant disposé axialement entre les rebords d'une armature respective, le sens axial du flux traversant l'induit entre les rebords de chaque armature étant choisi en sorte que, lorsqu'un courant est appliqué entre l'entrée et la sortie du bobinage, l'interaction entre les courants circulant dans les brins des faisceaux avec les flux magnétiques axiaux génèrent sur l'induit des couples de même sens, l'amplitude angulaire du débattement étant définie par la différence entre les amplitudes angulaires des paires de rebords et des faisceaux de brins radiaux,
- le moteur commandant en débattement le corps tournant et le moteur commandant en débattement la bague ont des armatures communes avec, entre les induits des deux moteurs et entre les rebords des armatures commune, des pièces magnétiques fixes partiellement annulaires isolées magnétiquement vis à vis de la partie statorique,
- le corps tournant est commandé en rotation à l'intérieur d'un débattement angulaire inférieur à 180° autour d'un axe X-X par un moteur de commande en débattement angulaire comportant un inducteur lié à l'arbre, et un induit fixe, tel que :
- l'inducteur comporte un barreau central allongé selon ledit axe et une portion tubulaire ferromagnétique s'étendant circonférentiellement tout autour de ce barreau central radialement à distance de celui-ci, ce barreau central comportant deux portions d'un même cylindre diamétralement opposées et d'axes confondus avec l'axe donné, d'amplitudes angulaires sensiblement égales inférieures à 180°, et séparées par deux méplats longitudinaux globalement parallèles, ainsi qu'un barreau central à aimantation permanente disposé suivant l'axe donné et de sens d'aimantation orienté sensiblement parallèlement aux méplats, et
- l'induit est un élément tubulaire interposé radialement entre le barreau central et la portion tubulaire ferromagnétique et comportant au moins un bobinage ayant une entrée et une sortie et comportant des brins longitudinaux parallèles disjoints raccordés par des brins disposés transversalement à l'axe donné, ces brins longitudinaux étant répartis en deux faisceaux diamétralement opposés, tous les brins d'un faisceau étant, lorsqu'un courant est appliqué entre l'entrée et la sortie du bobinage, parcourus par des courants de même sens, chaque faisceau étant en regard de l'une, respective, des portions de cylindre, et ledit débattement angulaire donné étant inférieur à la différence entre les amplitudes angulaires des portions de cylindre et des faisceaux,
- les patins de serrage s'appliquent sur la portion tubulaire ferromagnétique de l'inducteur,
- ce dispositif de verrouillage est disposé axialement entre deux paliers magnétiques à deux axes transversaux asservis,
- chaque palier magnétique comporte une couronne polaire ferromagnétique portée par l'arbre et, autour de cette couronne, portées par le stator, une couronne à aimantation permanente axiale, deux paires de noyaux axiaux entourés de bobines, et deux plaques polaires enserrant cette couronne à aimantation permanente et ces paires de noyaux,
- ce palier magnétique est à deux axes transversaux asservis et comporte une couronne annulaire à aimantation permanente axiale prise entre deux pièces annulaires polaires et liée à l'arbre et, radialement de part et d'autre de cette couronne, deux paires de bobines entourant des moyaux axiaux pris entre des plaques polaires, et une couronne de fermeture de flux magnétique,
- ce dispositif comporte un dispositif de commande en basculement comportant une pluralité de bobines adaptées à appliquer à l'arbre un couple transversal à l'axe de rota tion,
- les bobines de cette pluralité de bobines sont disposées autour de noyaux disposés au moins approximativement axialement en regard d'une partie rotorique liée à l'arbre, de part et d'autre à la fois de cette portion et de l'axe de rotation de cet arbre,
- il comporte un dispositif de commande en basculement comportant l'une des paires de bobines du palier, et un bloc de commande adapté à décaler la position radiale de consigne de l'arbre transversalement à l'axe de rotation,
- l'arbre comporte des butées axiales adaptées à venir axialement en regard des patins de serrage dans la configuration de verrouillage, grâce à quoi cet arbre est maintenu axialement dans ladite configuration de verrouillage.

On appréciera que on tire profit des jeux que constituent les entrefers radiaux du palier magnétique dans lequel est monté l'arbre pour autoriser un basculement de cet arbre, minime, certes, mais en pratique suffisant, par exemple pour compenser l'avance sur son orbite d'un satellite sur lequel est embarqué un dispositif de commande en débattement angulaire portant un miroir de balayage d'axe parallèle à l'orbite. Ce basculement est avantageusement commandé par modification de la consigne de position de l'arbre dans son palier magnétique, lequel est pour ce faire avantageusement choisi en sorte d'avoir au moins un axe radial actif (transversal à l'axe autour duquel on cherche à avoir un basculement) voire par des actions axiales de sens opposés appliquées en des zones diamétralement opposées de la partie rotorique de ce palier.

Des objets, caractéristiques et avantages de l'invention ressortent de la description qui suit, donnée à titre d'exemple non limitatif, en regard des dessins annexés sur lesquels :
- la figure 1 est une vue schématique en coupe axiale d'un dispositif de commande en débattement angulaire ;
- la figure 2 est une vue axiale, avec arrachement partiel, du palier magnétique de la figure 1 ;
- la figure 3 est une vue de principe de ce palier en coupe axiale selon la ligne III-III de la figure 2 ;
- la figure 4 est une vue de principe du moteur de la figure 1, en coupe axiale selon les lignes IV-IV des figures 5 et 6 ;
- la figure 5 est une vue de face de la partie statorique de ce moteur, vue selon la ligne V-V de la figure 4 ;
- la figure 6 est une vue en coupe du disque mobile du moteur, selon la ligne de coupe VI-VI de la figure 4 ;
- la figure 7 est une vue partielle en vue axiale du résolveur angulaire de la figure 1 ;
- la figure 8 est une vue agrandie et complète du dispositif de commande en basculement de la figure 1 ;
- la figure 9 est une vue de principe en coupe axiale d'un palier et d'un dispositif de commande en basculement selon une variante de réalisation ;
- la figure 10 est une vue partielle transversale du dispositif de verrouillage, selon la ligne X-X de la figure 1 ;
- la figure 11 est une autre vue partielle transversale de ce dispositif, selon la ligne XI-XI de la figure 1 ;
- la figure 12 est un schéma de principe de l'électronique de commande du dispositif de la figure 1 ;
- la figure 13 est une variante de la figure 1, montrant une vue schématique en coupe axiale d'un autre dispositif de commande en débattement angulaire ;
- la figure 14 est une vue en coupe transversale du moteur de la figure 13 ; et
- la figure 15 est une vue en perspective de la partie statorique (inducteur) de ce moteur de la figure 13.

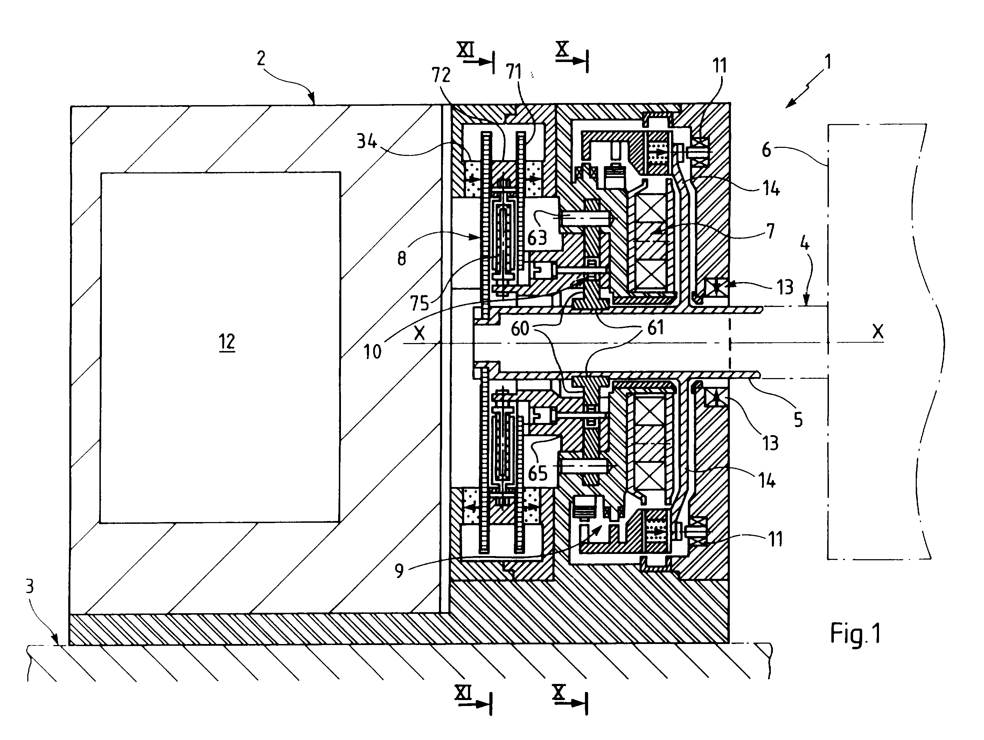

La figure 1 représente, sous la référence générale 1, un dispositif de commande en débattement angulaire comportant une partie statorique 2, destinée à être fixée à un support 3, par exemple un satellite suivant une orbite terrestre, et une partie rotorique 4, montée rotative vis à vis de la partie statorique 2 autour d'un axe X-X, par exemple parallèle à l'orbite précitée, comportant un arbre 5 et une portion utile 6 telle qu'un miroir de balayage.

Ce dispositif 1 est formé principalement d'un palier 7, d'un moteur 8, d'un éventuel résolveur angulaire 9, d'un dispositif de verrouillage 10 (avantageusement disposé axialement entre le palier et le moteur, ce qui améliore le maintien de l'arbre), d'un dispositif de commande en basculement 11, et d'un bloc électronique 12 contrôlant le fonctionnement des divers composants du dispositif 1. La référence 13 désigne des capteurs de position radiale servant au fonctionnement du palier 7.

Le palier 7 est du type magnétique actif, de manière à s'affranchir de tout frottement et de tous les inconvénients habituellement associés au frottement (vibrations, phénomène d'hystérésis en cas d'inversion du sens de mouvement, etc...) et qui seraient préjudiciables à une bonne précision angulaire. Il est ici unique, ce qui contribue à faciliter le basculement (le centre de masse de la partie rotorique est alors de préférence sensiblement dans le plan de ce palier).

Le dispositif de commande en basculement 11 profite du débattement axial ou radial qui existe dans un palier entre rotor et stator pour induire un basculement soit par déplacement radial de la partie rotorique du palier, soit par actions axiales de sens contraires en deux zones diamétralement opposées de cette partie rotorique.

Le moteur 8 est à débattement angulaire limité pouvant ici approcher (sans l'atteindre) la valeur de 180° ; il a une conformation très plate ce qui lui confère un encombrement axial bien plus faible que les moteurs connus, (ce qui en permet une implantation aisée sur un arbre de commande, même très court) combiné à une faible inertie en rotation autour de X-X.

Sa commande en asservissement fait ici intervenir le résolveur angulaire 9 qui sert à détecter la position angulaire de la partie rotorique 4 par rapport à la partie statorique. Ce résolveur est de tout type connu approprié, ici de préférence magnétique plutôt qu'optique, ce qui correspond à une plus grande simplicité et des tolérances un peu plus élevées.

Le dispositif de verrouillage 10 est un système mécanique réversible du type pince de serrage auto-centrée, ce qui s'affranchit des inconvénients des solutions pyrotechniques (notamment pollution, caractère mono-coup, reproductibilité de fabrication insuffisamment contrôlée, sécurité insuffisante en cas de présence humaine) et permet au sol des essais complets avec plusieurs verrouillages et déverrouillages.

Les divers étages précités sont détaillés ci-dessous.

Diverses valeurs numériques seront données (pour préciser l'exemple considéré ici), correspondant aux spécifications suivantes, pour un système de balayage optique embarqué sur satellite :
- précision de visée : 0,25*10⁻³ rad mécaniques
- stabilité sur 150 ms : 0,085*10⁻³ rad mécaniques
- débattement maximum : 113,925°
- couple perturbateur induit par réaction : 6*70⁻²N.m
- temps de transition entre deux positions de visée décalées de 1.65° mécanique : 66 ms
- masse mécanique : < 4 kg
- amplitude de basculement : 1,38*10⁻³ rad
- tension d'alimentation : 22-37 V
- durée de vie : 4 ans (stockage) + 5 ans (service)

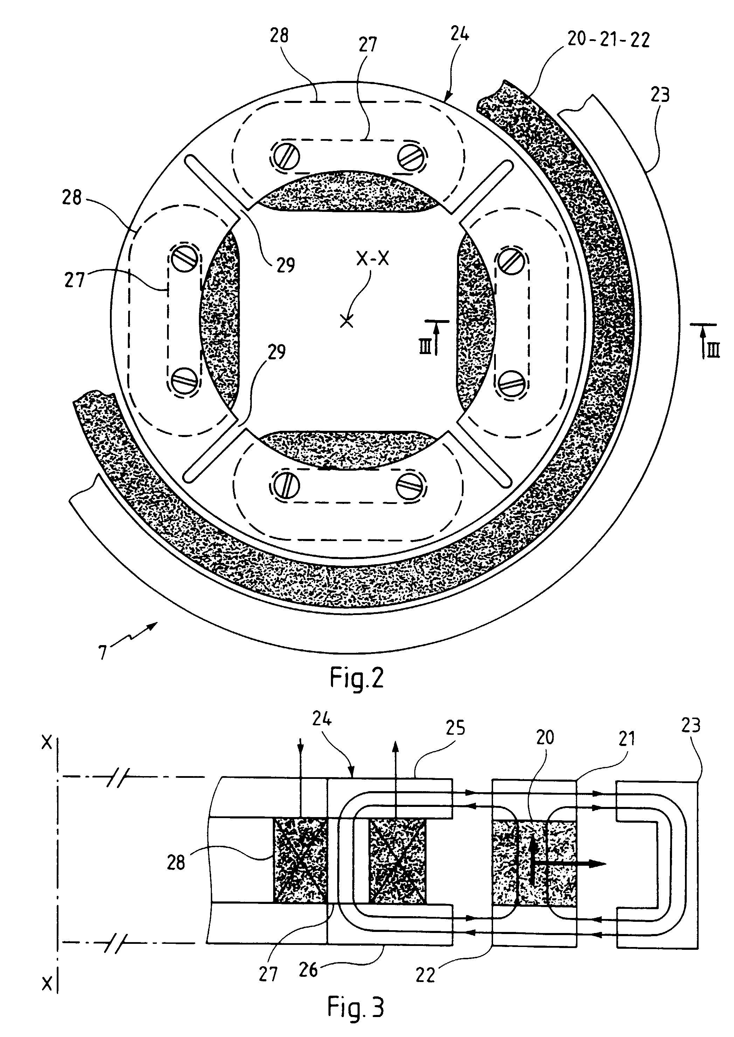

Ainsi tout d'abord la structure et le fonctionnement du palier magnétique 7 sont représentés aux figures 2 et 3. Le palier magnétique 7 est d'un type classique, connu en soi d'après par exemple US-4,470,644 (WEISSER) et déjà utilisé dans diverses applications spatiales (roues d'inertie des satellites SPOT et HELIOS notamment) ou terrestres (paliers industriels pour turbines électriques par exemple).

Ce palier 7 est ici du type à deux axes transversaux asservis (on parle parfois de palier à contrôle radial actif et à contrôle axial passif). Cette solution est notamment intéressante pour des raisons de faible encombrement axial. En l'absence de cette contrainte on peut préférer un palier à contrôle radial passif et à contrôle axial actif ce qui présente des avantages de simplicité du point de vue électronique.

Il est rappelé ici qu'un système de suspension magnétique ne peut jamais être complètement passif car on peut démontrer qu'il y a toujours au moins un degré de liberté suivant lequel la partie suspendue (rotor) est dans un état d'équilibre instable (c'est-à-dire que la suspension a suivant ce degré de liberté une raideur négative), ce qui impose la mise en oeuvre pour ce degré de liberté d'une boucle active à actionneurs du type bobines.

Comme cela sera mentionné ci-dessous, le fait que le palier 7 soit à contrôle radial actif a pour avantage de permettre, en modifiant les consignes d'asservissement, de commander le basculement de l'axe X-X de l'arbre.

Ainsi que cela ressort des figures 2 et 3, ce palier comporte, du côté partie rotorique, une couronne 20 d'aimants permanents à aimantation axiale, pris axialement en sandwich entre deux pièces polaires plates annulaires 21 et 22 ainsi que, du côté partie statorique, une couronne extérieure 23 de fermeture de circuit magnétique à section axiale en U, et une couronne interne 24, comportant deux pièces polaires annulaires plates 25 et 26 enserrant quatre noyaux 27 entourés chacun d'une bobine 28 et décalés angulairement de 90°. Dans les pièces polaires 25 et 26 sont avantageusement prévues des fentes 29 divisant ces pièces en secteurs de 90° qui ne sont reliés qu'à proximité de la couronne d'aimants 20 ; ces fentes empêchent les fuites magnétiques d'une bobine à l'autre. A chaque axe d'asservissement radial (il y en a ici deux) sont associées deux bobines diamétralement opposées, connectées électriquement l'une à l'autre pour former un circuit indépendant de celui de l'autre axe.

Cette couronne d'aimants est attelée à l'arbre central par une pluralité de bras 14.

Dans ce type de palier, le rotor est rappelé passivement s'il est déplacé axialement ou s'il bascule suivant un axe perpendiculaire à l'axe X-X.

On appréciera que les bobines et les aimants mélangent leurs flux (voir la figure 3). Les aimants permanents de la couronne 20 produisent un flux principal statique tandis que les bobines, lorsqu'elles sont excitées par un courant de sens donné, génèrent un flux additionnel qui sert à moduler le flux permanent ou statique existant dans les entrefers et donc à augmenter d'un côté de la couronne (à la figure 3, du côté externe) et diminuer de l'autre côté (à la figure 3, du côté interne) la force radiale appliquée à la partie suspendue et donc appliquer à cette dernière une force radiale de sens et d'amplitude propre à ramener cette partie suspendue en sa position d'équilibre. Il suffit d'inverser le courant dans les bobines pour générer une force contraire. Bien sûr les bobines associées à un même axe sont montées et alimentées en sorte d'appliquer toujours l'une et l'autre des forces de même sens. Un avantage de cette disposition est d'offrir une caractéristique effort/courant qui est quasi-linéaire : cela permet l'emploi, dans le bloc électronique, de simples amplificateurs linéaires.

Outre l'absence de frottement (augmentant la durée de vie) et de "bruit de frottement" (améliorant la précision angulaire), ce palier à aimants permanents présente les avantages suivants :
- encombrement très réduit,
- consommation permanente quasi nulle en l'absence de perturbation vibratoire,
- raideurs radiale, axiale et en basculement largement suffisantes pour l'application envisagée.

Un exemple de dimensionnement du palier 7 est le suivant :
- diamètre moyen du rotor du palier : 100 mm
- entrefers (extérieur et intérieur) : 0,50 mm
- inertie de rotation du rotor et de sa fixation à l'axe : 5,8*10⁻⁴ kg.m²
- masse d'aimants : 50 g
- raideurs :
   axiale : 62 N/mm
   radiale : 225 N/mm
   en basculement : 140 N.m/rd
- jeu radial de butée (au rayon) : 0,20 mm
- bobine d'actionnement :
   nombre de spires : 300
   diamètre de fil : 0,25 mm
   intensité de décollage sous 1g et pour 0,2 mm de décalage initial : 1,1 A
   tension mini de décollage : 16 V

Il est à noter que lors d'essais au sol, si l'ensemble est disposé suivant un axe vertical, la boucle d'asservissement radial ne nécessite pas plus de puissance électrique qu'en vol : le poids de l'ensemble suspendu n'influe pas sur la position radiale du rotor. Cependant les tension et courant de décollage indiqués ci-dessus ont été dimensionnés de manière à pouvoir faire fonctionner le palier au sol quelle que soit sa position ; toutefois seule la position verticale avec compensation du poids par un dispositif axial (contrepoids sur poulie) est représentative du fonctionnement en apesanteur.

En variante non représentée, le palier est du type à deux axes asservis dont les aimants et les bobines sont portés par le stator (d'où une faible inertie rotorique) ainsi que cela est représenté dans le brevet US-4,918,345 (VAILLANT DE GUELIS et al.).

L'asservissement est réalisé à partir des informations données par les capteurs 13 de position radiale du rotor (deux capteurs par axe asservi). Le palier magnétique 7 peut utiliser indifféremment des capteurs de vitesse ou bien des capteurs de déplacement (il est à la portée de l'homme de métier d'adapter le bloc électronique en conséquence).

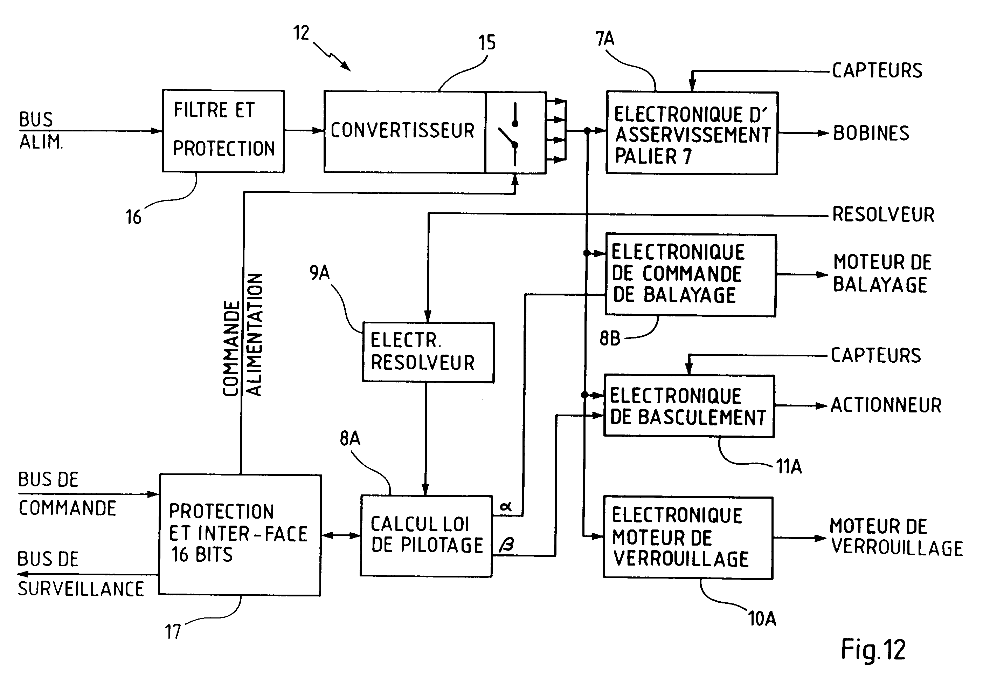

La stabilité du rotor en lévitation magnétique est assurée par deux chaines d'asservissement identiques pilotant chacune un axe, représentées conjointement sous la référence 7A à la figure 12. Chaque chaine comporte trois fonctions :
- un étage de traitement du signal d'entrée,
- un étage de correction,
- un étage d'amplification.

Seules les fonctions génération de la fréquence porteuse 50 kHz des capteurs de position sont communes.

Cette électronique reçoit en entrée un signal image de la position du rotor ; celui-ci est traité via un correcteur qui assure la fonction de transfert nécessaire à la stabilité de l'asservissement. Un amplificateur de puissance assure l'interface avec le palier.

Le décollage radial du rotor à partir d'une position en butée s'effectue automatiquement sans adjonction d'une fonction supplémentaire. Seule la présence de la tension d'asservissement permet le décollage du rotor par rapport à sa position en butée.

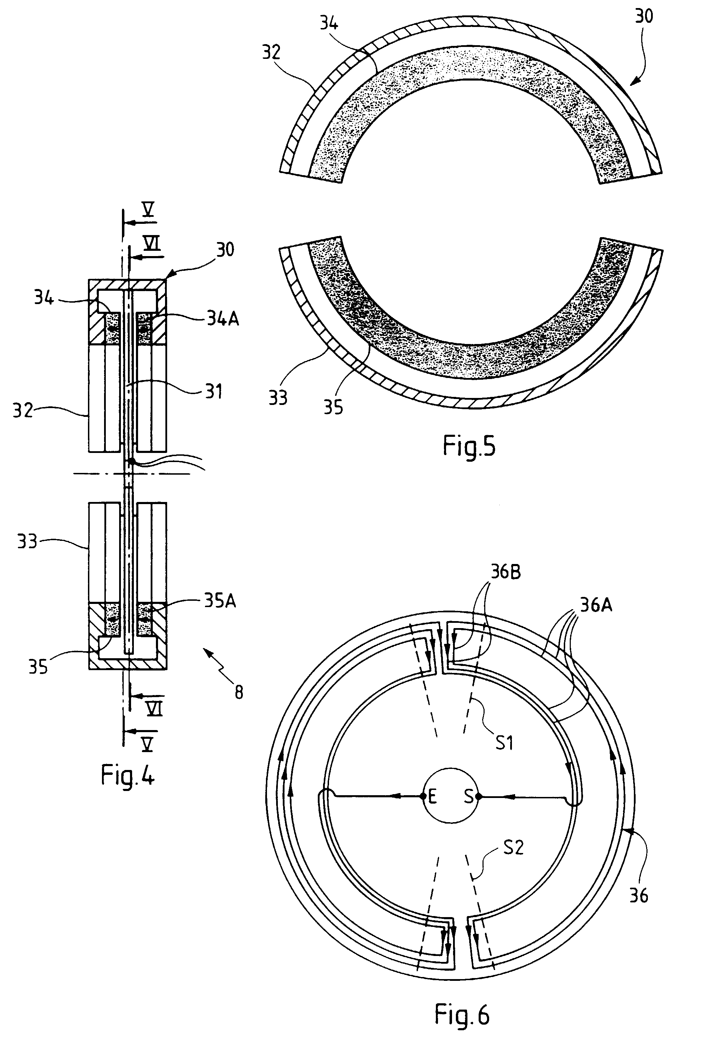

Tel que représenté aux figures 4 à 6, le moteur 8 servant à commander le déplacement angulaire de la partie rotorique 4 est un moteur couple à débattement limité à environ 120°, comportant une partie statorique ou inducteur 30 comportant une paire de pôles et une partie rotorique, aussi appelée induit 31, constituée d'un disque portant un ou plusieurs bobinages plans, de préférence réalisés chacun selon la technologie des circuits imprimés.

Plus précisément, ainsi que cela ressort des figures 4 et 5, l'inducteur 30 comporte une paire d'armatures magnétiques 32 et 33 disjointes, coiffant sans contact la périphérie de l'induit sur des secteurs angulaires inférieurs à 180° (par exemple 150°) et présentant des rebords formant des saillies axiales ou pôles axialement en regard au travers de l'induit et définissant avec lui des entrefers radiaux. Ces armatures portent chacune au moins une portion de couronne à aimantation permanente 34 ou 35 respectivement, générant un flux magnétique se refermant axialement au travers de l'induit. Ces portions de couronne à aimantation permanente 34 ou 35 longent avantageusement des entrefers situés de part et d'autre de l'induit 31 et sont donc à aimantation axiale.

Dans l'exemple considéré ici, les flux magnétiques respectifs des deux armatures traversent l'induit dans des sens respectivement différents, et les portions de couronne 34 et 35 ont des sens d'aimantation axiale opposés.

Pour bien contrôler le flux magnétique au travers de l'induit, celui-ci est avantageusement interposé axialement entre deux portions de couronne à aimantation permanente 34 et 34A, ou 35 et 35A, pour chaque armature.

Le (ou les) bobinage(s) formé(s) sur l'induit 31 sont formés de brins en arcs de cercle 36A centrés sur l'axe X-X et raccordés par des tronçons ou brins radiaux 36B ici répartis en deux secteurs ou faisceaux S1 et S2 diamétralement opposés, par exemple d'amplitude angulaire d'environ 30°. Ces arcs de cercle 36A et ces tronçons radiaux 36B sont raccordés en sorte de former un bobinage 36 ayant une borne d'entrée E et une borne de sortie S.

Un tel bobinage 36 est représenté à la figure 6, étant précisé que, pour la clarté du dessin, on a exagéré l'écartement entre les tronçons 36B voisins, ou les arcs voisins 36A, et donc minimisé leur nombre. On notera que les arcs de cercle s'étendent sur près de 180° et que les brins radiaux au sein de chacun des deux secteurs S1 et S2 sont, lorsqu'un courant est appliqué entre les bornes E et S, parcourus par des intensités de même sens. Les arcs de cercle définissent avec les tronçons radiaux des spires conformées en "banane" et emboîtées les unes dans les autres en sorte de former au moins un ensemble de spires, ici deux ensembles de spires disposées de part et d'autre d'un diamètre reliant les secteurs S1 et S2. L'un des tronçons radiaux (ici le tronçon médian du secteur S1) raccorde les deux ensembles de spires (qui constituent ainsi deux demi-bobinages).

Le bobinage peut être formé de fils mais comme cela a été indiqué ci-dessus, le bobinage 36 peut être réalisé par dépôt de pistes, selon la technologie des dicuits imprimés.

L'induit peut comporter plusieurs bobinages 36 ménagés en des couches de circuit imprimé axialement superposées et isolées électriquement les unes des autres (il peut y avoir plusieurs bobinages sur une même couche), l'entrée de chaque bobinage étant toutefois connectée à la sortie du précédent, de manière à ce que ces bobinages soient en série, et les faisceaux S1 et S2 des divers bobinages étant respectivement superposés axialement, en sorte d'ajouter et non soustraire les couples générés par les faisceaux voisins.

Les sens de parcours du courant dans les secteurs sont choisis en sorte que, lorsque chacun des secteurs est pris en sandwich (sans contact pour ménager les entrefers axiaux précités) dans une armature respective, les flux d'aimantation permanente des deux armatures qui se referment au travers des secteurs induisent sur l'induit des couples de même sens.

Les brins en arc de cercle sont de préférence situés radialement à l'écart des rebords ou portions polaires en sorte d'éviter autant que possible la génération de couples radiaux. D'autre part, les armatures sont de préférence suffisamment profondes pour permettre la condition précitée tout en préservant les brins radialement extérieurs de possibles champs de fuite.

On appréciera que le courant circulant dans les arcs de cercle n'induit aucun couple sur l'induit.

On appréciera qu'un tel principe se généralise à des moteurs à une phase et à n paires de pôles, du moment que le débattement voulu est inférieur à 2π/n, auquel cas on prévoit sur l'induit n paires de secteurs diamétralement opposés ; il peut y avoir un ou plusieurs bobinage(s) par couche de circuit imprimé, avec des spires en bananes s'étendant d'un secteur correspondant à une paire de pôles à un secteur adjacent s'étendant à une autre paire de pôles. Comme précédemment, l'amplitude de débattement est définie par la différence des amplitudes angulaires des armatures et des secteurs ou faisceaux de brins radiaux.

On notera à ce propos que l'amplitude des armatures est en fait l'amplitude des rebords de celles-ci et que ce n'est que de manière préférée que le fond des armatures a une même amplitude que ces rebords : en variante ce fond radial pourrait être d'amplitude plus faible.

Une telle configuration permet d'obtenir des couples importants avec des induits de faible masse, donc de faible inertie de rotation ; de plus elle présente l'avantage de fournir un couple constant (donc sans ondulation) pour une intensité donnée sur tout son débattement angulaire, soit ici 120° (l'amplitude de chaque armature = 150° - amplitude de chaque secteur = 30°) ce qui ne pourrait être obtenu de façon fiable avec un moteur synchrone ou un moteur à commutation entre plusieurs paires de pôles. Un autre avantage fondamental de ce moteur 8 est l'absence d'effort magnétique divergent (raideur négative), ce qui permet son utilisation couplée avec un palier magnétique sans problème supplémentaire de stabilité à résoudre.

L'alimentation de ce moteur se fait par l'intermédiaire de fils directement soudés aux bornes d'entrée et de sortie de l'induit, ce qui est possible du fait du débattement limité de cet induit.

A titre d'exemple, les caractéristiques principales de ce moteur sont :
- diamètre moyen du bobinage rotor/induit : 90 mm
- diamètre max du rotor : 120 mm
- induction dans l'entrefer 0,3 à 0,4 T
- nombre de couches de circuit imprimé au rotor 4 à 6
- épaisseur du rotor 1,6 mm
- inertie du rotor 1,3*10⁻⁵ kg.m²
- couple maximum 6.10⁻² N.m
- intensité pour le couple max. 2 A

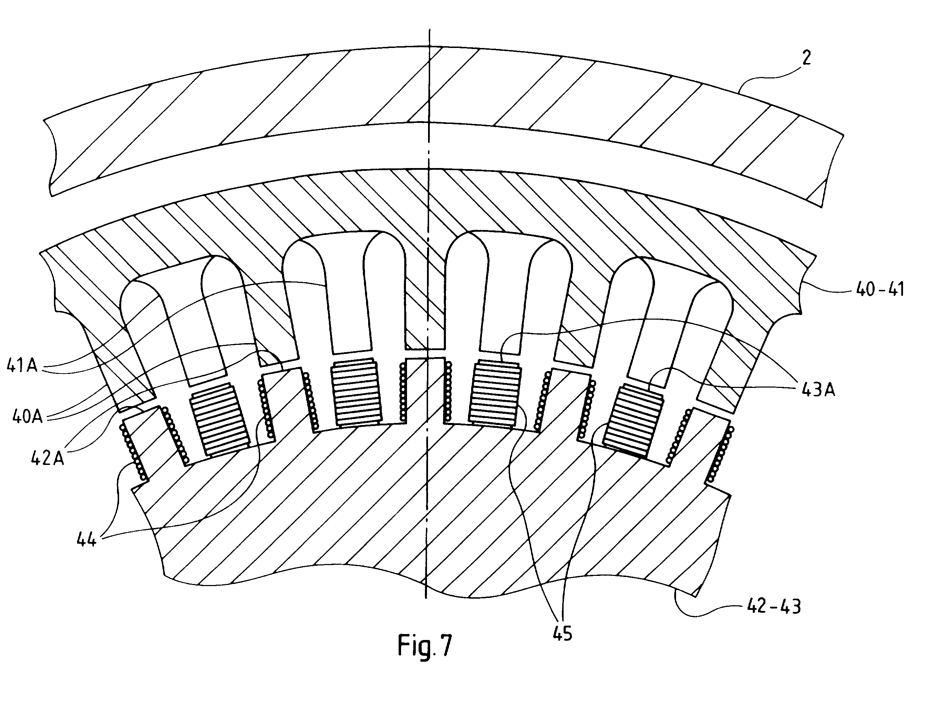

Deux technologies (connues en soi) de détection de position angulaire sont possibles pour obtenir la précision angulaire demandée :
- résolveur optique (cas non représenté) : composé d'un disque de verre gravé, et de plusieurs paires d'émetteur (diode optique) - récepteur décalés d'un quart de pas de gravure pour connaître le sens de rotation et améliorer la précision du résolveur. L'inconvénient de ce type de résolveur est le très petit jeu nécessaire entre le disque d'une part, et les émetteurs-récepteurs d'autre part (quelques dizaines de microns), ce qui pourrait se révéler incompatible avec la souplesse du palier magnétique associé (ou du moins le jeu axial de butée). Par contre l'électronique pourrait être assez simple. Ce type de décodeur fonctionnerait en relatif (incrémentation - décrémentation) et nécessiterait un repère pour la position zéro.
- résolveur magnétique 9 à reluctance variable (cas représenté à la figure 7) composé d'une partie tournante liée à l'arbre (ici par l'intermédiaire de la partie rotor 20 du palier 7) et avantageusement formée de deux couronnes dentées 40 et 41 décalées à la fois axialement et radialement (de la moitié de l'écart angulaire entre les dents 40A ou 41A des couronnes - il y en a par exemple 32 de sorte que le décalage radial est 5,625° - pour connaître le sens de rotation) et d'une partie fixe composée elle aussi de deux couronnes dentées 42 et 43 mais dont les dents 42A et 43A sont entourées de bobinages 44 et 45.

Dans ce dernier cas, une tension alternative sinusoïdale est injectée dans les bobines de chaque couronne de la partie fixe (toutes les bobines sont en série) et le courant de sortie retrace la reluctance du circuit magnétique ainsi formé : reluctance faible pour les dents en face les unes des autres, et forte lorsque les dents d'une couronne sont en face des creux de l'autre couronne. La forme des dents est étudiée pour avoir un signal de sortie sinusoïdal pour un pas polaire : une électronique de traitement appropriée (résolveur synchrodigital désigné par la référence 9A de la figure 12) permet ensuite de connaître précisément la position angulaire sur un pas polaire. Ce résolveur est donc à fonctionnement mixte : absolu sur chaque pas polaire, relatif (incrémental) d'un pas polaire à l'autre. Avec 32 dents sur chaque couronne et le résolveur synchrodigital 9A on obtient la précision voulue. L'avantage de ce principe réside dans la possibilité d'avoir des entrefers relativement grands (0,25 - 0,3 mm) compatibles avec la souplesse du palier magnétique.

Les étages d'entrée du résolveur 9A sont analogiques et réalisent la démodulation d'un pas polaire. Le premier étage de l'électronique réalise à partir d'une mesure de tension, image de la variation sinusoïdale de la self, une conversion par soustraction d'une tension de même fréquence, convenablement calibrée en phase et en amplitude.

Le deuxième étage est un convertisseur synchrodigital afin d'obtenir un mot binaire proportionnel à la position angulaire instantanée.

Le positionnement du miroir 6 à la valeur de consigne demandée est réalisé par un bloc d'asservissement schématisé en 8A à la figure 12, dont les entrées sont les informations du résolveur angulaire et la consigne de balayage, la sortie étant un signal de commande α.

La commande proprement dite du moteur de balayage (voir bloc 8B de la figure 12) se fait à l'aide d'un amplificateur de courant de linéarité et de distorsion de croisement compatibles avec les performances requises. Celui-ci reçoit en entrée la commande analogique a et délivre un courant de signe et d'amplitude proportionnel au couple nécessaire à l'asservissement du moteur balayage.

Son alimentation s'effectue si possible directement à partir de la tension non régulée d'un convertisseur 15 relié à un bus d'alimentation par un élément 16 de filtrage et de protection.

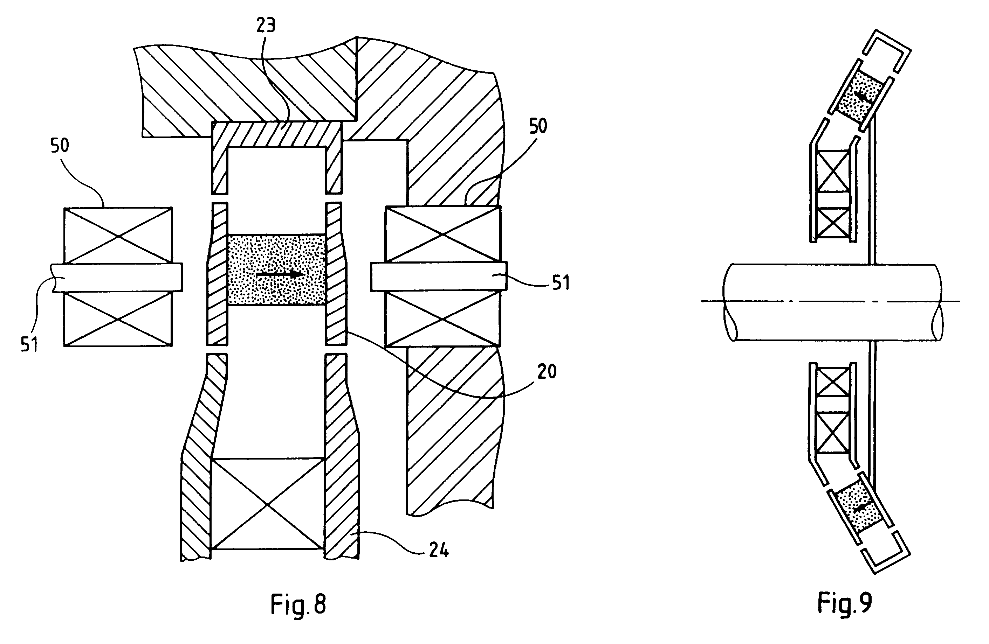

La figure 8 montre plus en détail et de façon plus complète le dispositif de commande en basculement 11.

Celui-ci comporte de petites bobines 50 disposées autour de noyaux 51 disposés au moins approximativement axialement en regard de la partie rotorique, par exemple en regard de la couronne 20 à aimantation axiale permanente. Ces bobines sont disposées de part et d'autre axialement de cette partie rotorique, en des zones diamétralement opposées à l'axe autour duquel on veut pouvoir provoquer un basculement (cet axe est perpendiculaire au plan de la figure 1). Seules les bobines 50 de droite sont représentées à la figure 1 pour des raisons de lisibilité.

La commande en basculement se fait par activation de deux bobines 50 disposées de part et d'autre à la fois de cette partie rotorique et de l'axe de celle-ci, en sorte d'attirer ce rotor, en une zone dans un sens axial et dans une zone diamétralement opposée dans le sens axial opposé, ce qui provoque un couple transversal sur l'arbre. On profite ici de ce que le palier magnétique a une raideur positive en basculement.

Ce couple est contrôlé par une électronique d'asservissement, schématisée en 11A à la figure 12, pilotée d'une part par la consigne de basculement β et, d'autre part, par la réponse des capteurs servant à lire l'angle B. Ces capteurs pourront soit :
- être des capteurs spécifiques (deux capteurs de position montés en différentiel situés tout près des bobines de commande, lisant la position du rotor),
- être constitués par les deux capteurs 13 de position du palier magnétique situés dans le plan perpendiculaire à l'axe de basculement, plus deux capteurs identiques à ceux du palier magnétique, montés dans le même plan mais décalés axialement.

Les avantages de cette solution étant d'une part d'utiliser les mêmes capteurs pour des fonctions différentes.

Une autre possibilité pour obtenir un basculement de l'axe consiste à conformer les pièces polaires des parties rotoriques et statoriques suivant un cône très aplati qui est très exagéré à la figure 9. Ainsi le simple contrôle de la position radiale de la partie suspendue correspond à une inclinaison de l'axe du palier. Cette solution supprime l'ensemble des bobines et capteurs décrits ci-dessus ; mais suppose bien sur que l'électronique 11A d'asservisement du palier magnétique soit modifiée en conséquence.

Cette solution présente l'avantage d'une légère réduction de poids (2 bobines, 2 capteurs et une partie d'électronique supprimée).

En fait les solutions précitées visent à faire basculer la partie rotorique autour d'un axe sensiblement compris dans le plan de palier.

En supposant que la partie rotorique est maintenue radialement en un quelconque endroit de l'arbre 5 (par exemple par un autre palier magnétique de préférence identique au palier 7), un basculement peut être obtenu par simple modification de la consigne d'équilibre radial du palier, sans modification structurelle de celui-ci.

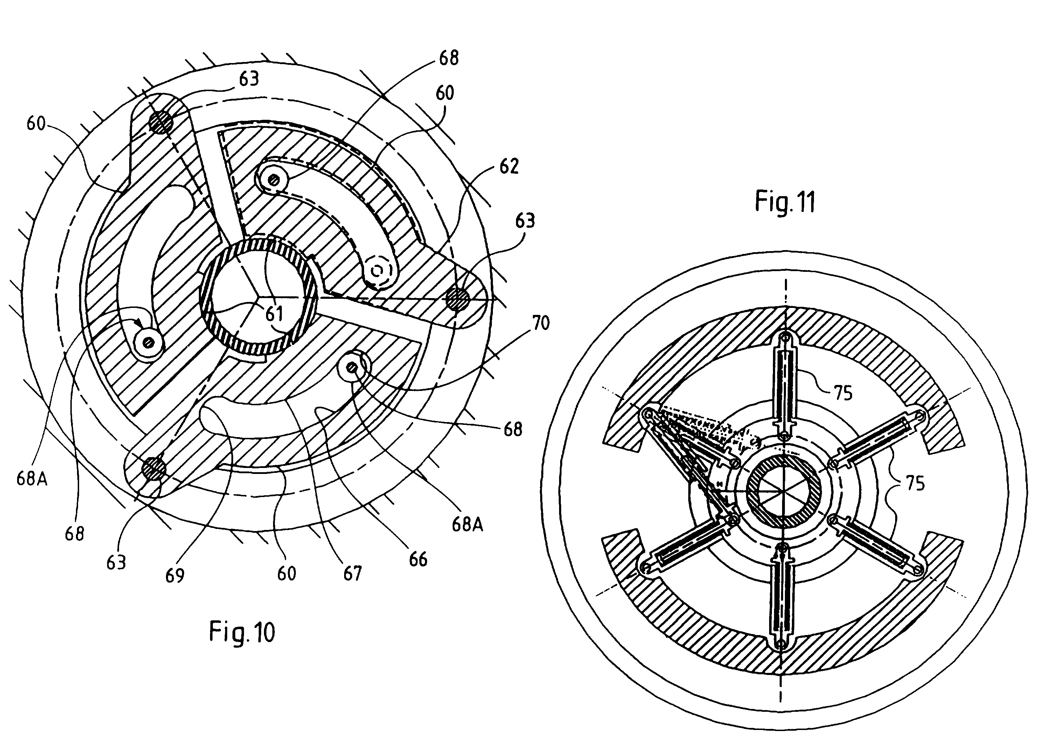

Le dispositif de verrouillage 10 est représenté aux figures 10 et 11.

Ce dispositif 11 comporte trois pinces 60 munies chacune d'un patin de serrage 61 adapté, avec les patins 61 des autres pinces, à enserrer l'arbre 5. De manière préférée, ainsi que cela ressort de la figure 1, les patins rentrent dans une gorge circonférentielle de l'arbre dont les flancs continus ou non permettent ainsi un maintien axial de l'arbre, dans un sens au moins (plus généralement il peut suffire de quelques portées axiales pour les tranches des patins).

Ces pinces 60 sont, en des zones 62 décalées aussi bien radialement que circonférentiellement vis à vis des patins 61, articulées sur la partie statorique de l'ensemble du dispositif, à l'aide de pions axiaux 63.

Ces pinces 60 sont logées dans une fente transversale d'une bague 65 (voir aussi la figure 1) adaptée à tourner autour de l'axe X-X avec un débattement limité, par exemple 60°.

Chacune des pinces comporte une lumière 66 dont les bords radialement interne 67 et externe 67', qui ne sont pas centrés sur l'axe X-X, forment des rampes pour un téton axial 68 solidaire de la bague et traversant cette lumière. De manière préférée, ces tétons 68 sont munis de roulement 68A ce qui minimise les frottements sur les rampes. Chaque lumière 66 comporte une première extrémité circonférentielle 69 proche de l'articulation 63 où le bord 67 est à distance minimale de l'axe de son patin 61 et une seconde extrémité circonférentielle 70 éloignée de l'articulation 63, où le bord est à distance maximale de l'axe du patin.

Les trois tétons axiaux 68 sont positionnés dans la bague 65 au travers de sa fente en sorte d'être simultanément, soit aux premières extrémités circonférentielles 69 (configuration de déverrouillage), soit aux secondes extrémités circonférentielles 70 (configuration de verrouillage).

Cette bague 65 est rappelée en rotation de manière bistable passive au moyen d'éléments élastiques 75 (à base de ressorts) - voir ci-dessous - vers l'une ou l'autre des configurations de verrouillage ou de déverrouillage, garantissant ainsi d'une part, en configuration de déverrouillage, le maintien en cette configuration et, d'autre part, en configuration de verrouillage, non seulement le maintien en configuration, mais aussi l'effort appliqué par les patins sur l'arbre : en pratique les lumières 66 sont dimensionnées en sorte que les patins de serrage viennent s'appliquer sur l'arbre avant que les tétons viennent en butée circonférentielle contre les secondes extrémités circonférentielles 70.

La bague 65 est manoeuvrée entre ses deux configurations à l'encontre des éléments de rappel bistable passif précités, par un moteur 71 qui est avantageusement de même type que le moteur 8 ; ce moteur 71 comporte même ici les mêmes armatures (voir la figure 1) que le moteur 8, avec des pièces magnétiques fixes 72 partiellement annulaires disposées entre les induits des deux moteurs et entre les portions de couronne aimantées de l'armature de la figure 5 (les pièces 72 ayant la même amplitude angulaire que ces portions de couronnes). Cette pièce annulaire 72 est fixée à la partie statorique par tout moyen connu approprié non magnétique pour éviter l'apparition de fuites magnétiques.

Bien que le débattement angulaire utile du moteur 71 soit plus petit que celui du moteur 8, son induit peut être, par souci de simplicité, choisi de même géométrie qu'à la figure 6.

Ce moteur est commandé par une électronique schématisée en 10A à la figure 12.

On rappellera ici que la configuration du moteur 71, comme celle du moteur 8, permet un faible encombrement axial (surtout si on utilise des armatures communes), et un couple important.

La bague 65, à laquelle est fixée l'induit du moteur 71, est de préférence reliée à la pièce annulaire magnétique 72 (ou à toute partie statorique) par une pluralité d'éléments élastiques 75 (par exemple quatre ou six) globalement radiaux et travaillant en compression, ici articulés, mobiles transversalement à l'axe entre deux configurations extrêmes dans lesquelles les pinces sont en configuration, soit de verrouillage, soit de déverrouillage ; ces éléments élastiques ont une configuration intermédiaire (d'équilibre instable) dans laquelle ils sont orientés radialement, grâce à quoi ce dispositif de verrouillage est rendu bistable de façon passive. On appréciera (voir ci-dessus) que ces éléments ont ainsi une double fonction puisqu'ils génèrent l'effort de serrage et assurent le positionnement bistable.

Les éléments élastiques assurent ainsi :
- un verrouillage sûr (non déverrouillage sous vibrations),
- un déverrouillage sûr lui aussi,
- une réversibilité de la fonction verrouillage/déverrouillage.

Cette solution permet à la fois d'éviter le recours à une libération pyrotechnique, d'autoriser lors des essais au sol du système complet plusieurs verrouillages et déverrouillages et donc de tester le système de verrouillage lui-même. Ce système est donc prévu pour fonctionner plusieurs fois au sol, mais a priori une seule fois en vol pour le déverrouillage.

Du point de vue alimentation (voir la figure 12) la seule source d'énergie requise est la tension primaire du bus d'alimentation. En entrée, l'électronique d'alimentation comprend (bloc 16 déjà cité) les protections nécessaires afin de conserver l'intégrité de l'alimentation ainsi que les filtrages utiles.

A la suite, un ou plusieurs convertisseurs 15 assurent la réalisation des tensions nécessaires à toute l'électronique du système de balayage, il réalise l'isolement galvanique.

La référence 17 de la figure 12 représente le bloc d'interface et de protection de l'ensemble vis à vis du calculateur de bord (et réciproquement) auquel il est relié par un bus de commande et un bus de surveillance.

Il est possible de prévoir, en cas de besoin, un système de compensation dynamique visant à supprimer, ou du moins à diminuer fortement le couple de réaction transmis au satellite. Le principe de ce système résiderait dans la mise en rotation d'un volant d'inertie en sens inverse de celui du miroir. Diverses solutions sont possibles mais la seule qui apparait réalisable de façon fiable (quoi que pénalisante du point de vue masse) sans dégrader le niveau de précision angulaire sur le balayage consiste à installer dans l'axe du système principal un autre palier magnétique, entraîné en rotation par un moteur strictement identique à celui du système de balayage et couplé à un volant d'inertie. Aucune liaison mécanique (engrenages) ne relie alors le système principal à ce nouvel ensemble palier-moteur-volant d'inertie ; simplement les deux moteurs (balayage et compensation dynamique) sont branchés ensemble (en série pour avoir le même couple) en opposition : la commande du balayage actionne ainsi à la fois le système portant le miroir et le contre-volant d'inertie. Le couple résultant transmis au satellite est donc du niveau de la différence de couple entre les deux moteurs, soit du niveau de la différence entre les inductions des aimants du stator de chacun des deux moteurs.

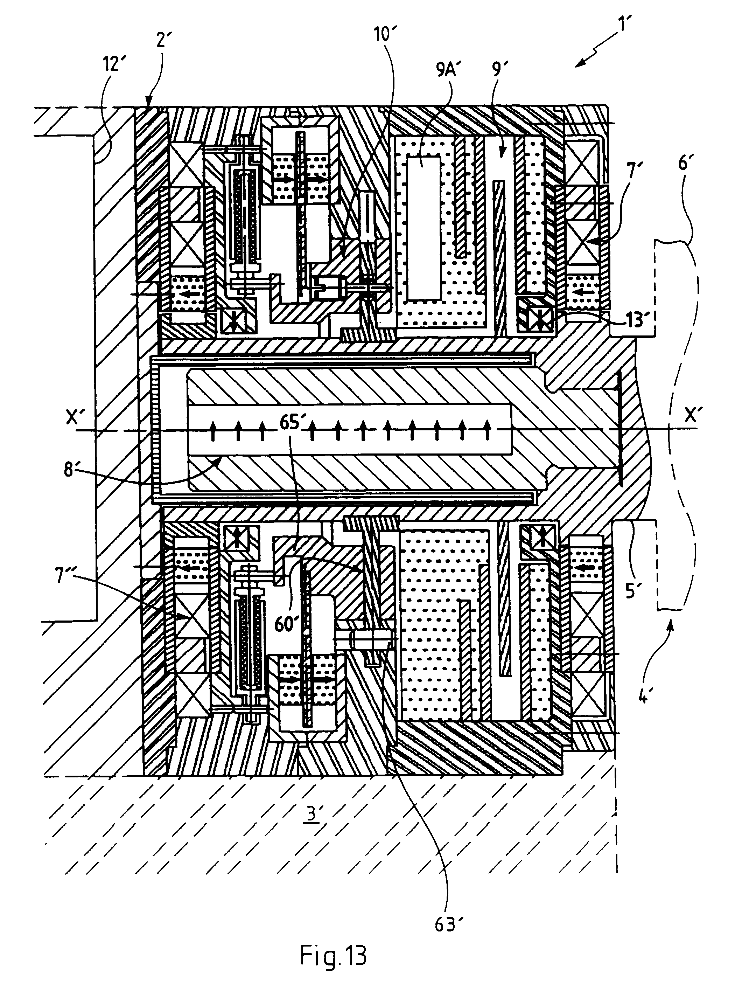

La figure 13 représente, sous la référence générale 1', un dispositif de commande en débattement angulaire comportant, comme celui de la figure 1, une partie statorique 2', destinée à être fixée à un support 3', par exemple un satellite suivant une orbite, et une partie rotorique 4', montée rotative vis à vis de la partie statorique 2' autour d'un axe X'-X', par exemple parallèle à l'orbite précitée, comportant un arbre 5' et une portion utile 6' telle qu'un miroir de balayage.

Ce dispositif 1 est formé principalement de paliers 7' et 7", d'un moteur 8', d'un éventuel résolveur angulaire 9', d'un dispositif de verrouillage 10' (avantageusement disposé axialement entre les paliers, ce qui améliore le maintien de l'arbre), d'un dispositif de commande en basculement, et d'un bloc électronique 12' contrôlant le fonctionnement des divers composants du dispositif 1'. La référence 13' désigne des capteurs de position radiale servant au fonctionnement des paliers 7',7".

Les paliers 7' et 7" sont, comme précédemment, du type magnétique actif. Ils sont ici identiques l'un à l'autre. Ils sont d'un type classique, connu en soi d'après le brevet français 87-03489 ou US-4.918.345 (VAILLANT DE GUELIS et al.), à deux axes transversaux asservis.

Chaque palier comporte, du côté partie rotorique, une simple couronne polaire ferromagnétique munie de nervures annulaires tandis que ce palier comporte, du côté statorique, une couronne d'aimants permanents à aimantation axiale, pris axialement en sandwich entre deux pièces polaires plates annulaires définissant des entrefers avec les nervures et enserrant par ailleurs deux paires (une seule est visible) de noyaux axiaux diamétralement opposés, ces paires étant décalées de 90° et ces noyaux étant entourés de bobines. Dans les pièces polaires sont avantageusement prévues des fentes radiales (non visibles) alternant circonférentiellement avec les ensembles noyau/bobine et visant à empêcher (de façon connue) les fuites magnétiques d'une bobine vers l'autre. A chaque axe d'asservissement radial (il y en a ici deux) sont associées deux bobines diamétralement opposées, connectées électriquement l'une à l'autre pour former un circuit indépendant de celui de l'autre axe.

On appréciera que ce palier permet une très faible inertie en rotation puisque l'essentiel des éléments constitutifs des paliers est porté par leur partie statorique.

Un exemple de dimensionnement des paliers 7' et 7" est le suivant :
- diamètre moyen du rotor du palier : 47 mm
- entrefers : 0,60 mm
- inertie de rotation des deux rotors : 7,1*10⁻⁶ kg.m²
- masse d'aimants : 70 g
- raideurs (par palier) :
   axiale : 20 N/mm
   radiale : 100 N/mm
- jeu radial de butée (au rayon): 0,20 mm
- actionneur :
   . nombre de spires : 170
   . diamètre de fil : 0,6 mm
   . intensité de décollage sous 1g et pour 0,2 mm (pire cas, lors des essais sol) de décalage initial : 2 A
   . tension mini de décollage : 5 V

L'asservissement est réalisé à partir des informations données par les capteurs 13 de position radiale du rotor (deux capteurs par axe asservi). Les paliers magnétiques 7' et 7" peuvent utiliser indifféremment des capteurs de vitesse ou bien des capteurs de déplacement (il est à la portée de l'homme de métier d'adapter le bloc électronique en conséquence).

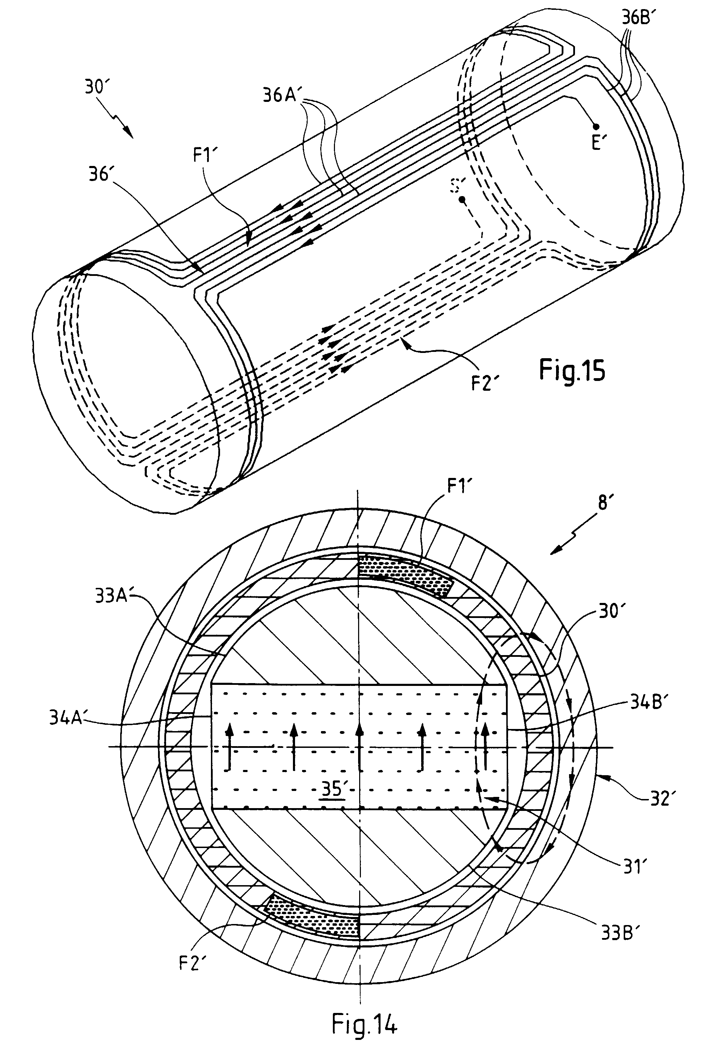

Tel que représenté aux figures 14 et 15, le moteur 8' servant à commander le déplacement angulaire de la partie rotorique 4' est un moteur couple, à débattement limité à environ 120°, qui est entièrement situé à l'intérieur de l'encombrement radial de l'arbre 5'.

Plus précisément, ce moteur couple 8 comporte, du côté stator, un induit tubulaire 30' et, du côté rotor, un inducteur composé d'un barreau central 31 s'étendant axialement à l'intérieur de l'induit tubulaire et d'une portion tubulaire ferromagnétique 32' s'étendant tout autour de l'induit tubulaire 30'.

On appréciera à la figure 13 que c'est également sur cette portion tubulaire ferromagnétique 32' que sont ménagées les nervures ferromagnétiques des paliers magnétiques 7' et 7".

Entre l'induit tubulaire 30' et la portion rotorique tubulaire 32' est ménagé un entrefer annulaire de dimension radiale normalement constante ; en effet la surface extérieure de l'induit et la surface intérieure de la portion tubulaire sont cylindriques. Par contre, la surface extérieure du barreau central 31' est formée de deux portions d'un même cylindre 33A' et 33B' d'amplitudes angulaires sensiblement égales inférieures à 180° (par exemple 150°) diamétralement opposées et séparées par deux méplats longitudinaux 34A' et 34B' (ici plans et parallèles) grâce à quoi les deux portions cylindriques 33A' et 33B' définissent avec l'induit deux entrefers de dimension radiale très inférieure à la distance radiale moyenne entre les méplats et cet inducteur. En variante non représentée, ces méplats sont convexes ou plutôt concaves.

Dans ce barreau central 31' est disposé un barreau à aimantation permanente 35' dont le sens d'aimantation est orienté transversalement à l'axe et parallèlement aux méplats en sorte de générer un flux magnétique depuis l'une des portions cylindriques vers l'autre. Ce flux quitte l'une des portions cylindriques et traverse radialement l'induit jusqu'à la portion tubulaire ferromagnétique puis circule circonférentiellement dans celle-ci pour repénétrer dans le barreau central par l'autre portion cylindrique. Une ligne de flux est représentée à titre d'exemple.

Le barreau à aimantation permanente s'étend avantageusement sur toute la largeur du barreau central entre les méplats de sorte que le barreau central se compose d'un barreau aimanté séparant deux pièces polaires.

Ainsi que cela est représenté à la figure 15, l'induit comporte au moins un bobinage 36'.

Chaque bobinage 36' comporte des brins longitudinaux parallèles disjoints 36A' (leur écartement a été exagéré à la figure 15 pour des raisons de clarté) raccordés par des brins 36B' disposés transversalement à l'axe, ici en arcs de cercle tels que les brins soient tous en série entre une borne d'entrée E' et une borne de sortie S'. Les brins longitudinaux sont répartis en deux faisceaux F1' et F2' diamétralement opposés, d'amplitude angulaire inférieure à celle des portions cylindriques du barreau central, par exemple ici de l'ordre de 20°. Tous les brins d'un même faisceau sont, lorsqu'un courant est appliqué entre les bornes E' et S', parcourus par des courants de même sens.

Ces faisceaux sont disposés sur l'induit en sorte d'être en regard des portions cylindriques du barreau central. De la sorte, dès qu'un courant est appliqué dans un sens ou dans l'autre entre les bornes E' et S', l'interaction de ce courant circulant dans les brins longitudinaux avec les flux magnétiques traversant l'induit génère un couple sur le barreau. Le débattement angulaire de l'inducteur vaut ainsi au maximum sensiblement la différence entre les amptitudes angulaires des faisceaux de l'induit et des portions cylindriques du barreau central.

On appréciera que les courants circulant dans les brins transversaux n'induisent aucun couple.

De préférence ces brins transversaux sont disposés axialement à l'écart du barreau central à aimantation permanente. En d'autres termes, ce barreau central est avantageusement plus court que les brins longitudinaux (on évite ainsi l'apparition d'efforts coaxiaux).

On appréciera que, bien que les matériaux à aimantation permanente soient généralement de poids spécifique élevé, cela a selon cette variante de l'invention une faible incidence sur l'inertie en rotation de l'équipage mobile puisque le barreau aimanté est disposé suivant l'axe de rotation.

Le bobinage 36' peut être réalisé par dépôt de pistes, selon la technologie des circuits imprimés, auquel cas l'induit peut comporter plusieurs bobinages 36 ménagés en des couches de circuit imprimé radialement superposées et isolées électriquement les unes des autres, l'entrée de chaque bobinage étant toutefois connectée à la sortie du précédent, de manière à ce que ces bobinages soient en série, et les faisceaux analogues des divers bobinages étant respectivement superposés radialement en sorte d'ajouter et non soustraire les couples générés par les faisceaux voisins.

Toutefois, ainsi que cela ressort de la figure 15, le bobinage peut être formé de fils tels que les brins des faisceaux soient des fils conducteurs répartis sur l'épaisseur de l'induit tubulaire.

Comme dans le cas de la figure 1, une telle configuration permet ainsi d'obtenir des couples importants avec des induits de faible inertie de rotation ; de plus elle présente l'avantage de fournir un couple constant (donc sans ondulation) pour une intensité donnée sur tout son débattement angulaire, soit environ ici 130° ce qui ne pourrait être obtenu de façon fiable avec un moteur synchrone ou un moteur à commutation entre plusieurs paires de pôles. Un autre avantage fondamental de ce moteur 8 est l'absence d'effort magnétique divergent (raideur négative), ce qui permet son utilisation couplée avec un palier magnétique sans problème supplémentaire de stabilité à résoudre.

A titre d'exemple, les caractéristiques principales de ce moteur sont :
- diamètre moyen du bobinage stator (induit) : 28,5 mm
- épaisseur du tube statorique : 2,2 mm
- induction dans l'entrefer : 0,3 T
- résistance du bobinage : 2,3 Ohms
- inertie du rotor (aimant + tube central) : 6,46*10⁻⁶ kg.m²
- couple maximum : 6*10⁻² N.m
- intensité pour le couple max. : 2 A
- puissance dissipée à Imax : 9 W

Le résolveur 9' est ici optique, composé d'un disque de verre gravé, et de plusieurs paires d'émetteur (diode optique) décalés d'un quart de pas de gravure pour connaître le sens de rotation et améliorer la précision du résolveur.

De manière préférée, on profite ici de la présence de deux paliers magnétiques pour obtenir un basculement en déplaçant tout simplement la position de consigne de l'un au moins des deux paliers, voire les positions de consigne de l'arbre dans des sens radiaux opposés pour les deux paliers, ce qui induit un couple.

Ainsi par exemple, on dispose les paliers 7' et 7" en sorte que leurs axes transversaux asservis soient parallèles, et on agit sur les bobines des paliers agissant parallèlement à une même direction. En fait, un basculement est obtenu dès lors qu'on déplace la consigne pour une seule paire de bobines dans un seul palier.

Ce basculement est contrôlé par l'électronique d'asservissement pilotée à partir de la consigne de basculement β.

Le dispositif de verrouillage 10' est identique à celui 10 représenté aux figures 10 et 11.

Il va de soi que la description qui précède n'a été proposée qu'à titre d'exemple non limitatif et que de nombreuses variantes peuvent être proposées par l'homme de l'art sans sortir du cadre de l'invention comme définie dans les revendications suivantes. Ainsi par exemple, on peut supprimer le résolveur, par exemple lorsque le rotor du moteur est soumis à un rappel élastique vers une configuration donnée vis à vis du stator.

## Revendications

1. Dispositif de positionnement (1) d'un corps tournant (4) mobile autour d'un axe (X-X) par rapport à un corps statorique (2) comportant un palier magnétique (7) et un dispositif de verrouillage/déverrouillage (10), caractérisé en ce que ce dispositif de verrouillage/déverrouillage (10) comporte une pluralité de pinces (60) munies de patins de serrage (61) adaptés à venir porter radialement sur un arbre (5) du corps tournant (4), ces pinces (60) étant articulées sur le corps statorique (2) autour de pions axiaux (63) situés à distance de l'axe de rotation et régulièrement répartis angulairement autour de cet axe de rotations (X-X) en étant mobiles en pivotement autour de ces pions axiaux (63), sous l'action d'une pièce de manoeuvre mobile (65), entre une configuration de déverrouillage dans laquelle les patins (61) de serrage sont à une distance maximale de l'axe et une configuration de verrouillage dans laquelle ces patins (61) sont à une distance minimale de l'axe (X-X) propre à induire un serrage radial de l'arbre (5).

2. Dispositif de positionnement selon la revendication 1, caractérisé en ce que la pièce de manoeuvre (65) est une bague annulaire centrée sur l'axe ayant un débattement angulaire donné, comportant autant de tétons axiaux (68) qu'il y a de pinces, chaque pince comportant une lumière circonférentielle (67) traversée par l'un des tétons (68), les bords radialement interne et externe (69, 70) de cette lumière formant des rampes pour les tétons, cette lumière comportant une première extrémité circonférentielle (69) située à une distance minimale de l'axe de rotation et une seconde extrémité circonférentielle (70) située à une distance maximale de l'axe de rotation, grâce à quoi, lorsque les tétons de la bague sont dans les premières extrémités circonférentielles des lumières, les pinces sont dans leurs configurations de déverrouillage et lorsque les tétons de la bague sont dans les secondes extrémités circonférentielles des lumières, les pinces sont dans leurs configurations de verrouillage.

3. Dispositif de positionnement selon la revendication 2, caractérisé en ce que les tétons axiaux (68) sont chacun munis de roulements (68A) adaptés à rouler sur les bords radialement internes ou externes (67,67') des lumières circonférentielles.

4. Dispositif de positionnement selon la revendication 2 ou la revendication 3, caractérisé en ce que les patins de serrage (61) sont sollicités radialement vers l'axe par des éléments élastiques (75) agissant sur la bague (65).

5. Dispositif de positionnement selon l'une quelconque des revendications 2 à 4, caractérisé en ce que la bague de manoeuvre (65) est reliée à une portion statorique par une pluralité d'éléments élastiques (75) globalement radiaux, travaillant en compression, mobiles dans un plan transversal à l'axe de part et d'autre d'une configuration instable dans laquelle ils sont orientés radialement, entre deux configurations extrêmes stables pour lesquelles les pinces sont en leurs configurations de verrouillage ou de déverrouillage, respectivement.

6. Dispositif de positionnement selon l'une quelconque des revendications 2 à 5, caractérisé en ce que la bague (65) est actionnée en débattement angulaire par un moteur-couple (71) comportant un induit solidaire de la bague (65) et un inducteur (72) lié au corps statorique (2).

7. Dispositif de positionnement selon la revendication 6, caractérisé en ce que l'induit (31) a globalement la forme d'un disque plat et l'inducteur est formé d'au moins une paire d'armatures magnétiques (32, 33) circonférentiellement disjoints coiffant sans contact la périphérie radialement externe de ce disque et présentant sur des secteurs angulaires disjoints deux rebords formant des saillies axiales axialement en regard au travers du disque, au moins une portion de couronne (34, 34A, 35, 35A) à aimantation permanente coplanaire à l'axe étant ménagée dans chaque armature en sorte de générer un flux magnétique se refermant axialement entre les rebords au travers de l'induit, cet induit comportant au moins un bobinage plan (36), avec une entrée (E) et une sortie (S), formé de brins en arc de cercle (36A) concentriques et centrés sur l'axe et de brins radiaux (36B) raccordant les brins en arc de cercle en sorte de former au moins un ensemble de spires en forme de banane emboîtées les unes dans les autres mais raccordées en série, les brins radiaux (36B) de chaque bobinage (36) étant regroupés en au moins une paire de faisceaux formés de brins adjacents mais disjoints tels que, lorsqu'un courant est appliqué entre l'entrée (E) et la sortie (S) du bobinage (36), tous les brins radiaux (36B) d'un même faisceau soient parcourus par des courants de même sens radial, chacun des faisceaux étant disposé axialement entre les rebords d'une armature respective, le sens axial du flux traversant l'induit entre les rebords de chaque armature étant choisi en sorte que, lorsqu'un courant est appliqué entre l'entrée (E) et la sortie (S) du bobinage (36), l'interaction entre les courants circulant dans les brins des faisceaux avec les flux magnétiques axiaux génère sur l'induit (31) des couples de même sens, l'amplitude angulaire du débattement étant définie par la différence entre les amplitudes angulaires des paires de rebords et des faisceaux de brins radiaux.

8. Dispositif de positionnement selon la revendication 7, caractérisé en ce que ladite portion de couronne à aimantation permanente de chaque armature constitue l'un des rebords de cette armature, cette portion de couronne étant à aimantation permanente axiale.

9. Dispositif de positionnement selon la revendication 8, caractérisé en ce que chaque rebord de chaque armature est constitué d'une portion de couronne (34, 34A, 35, 35A) à aimantation permanente axiale.

10. Dispositif de positionnement selon l'une quelconque des revendications 7 à 9, caractérisé en ce que ce moteur comporte une seule paire d'armatures, diamétralement opposées et une seule paire de faisceaux par bobinage, diamétralement opposés.

11. Dispositif de positionnement selon la revendication 10, caractérisé en ce que l'amplitude angulaire de chaque armature est comprise entre 90° et 170°.

12. Dispositif de positionnement selon la revendication 10 ou la revendication 11, caractérisé en ce que l'amplitude angulaire de chaque faisceau est inférieure à 30° environ.

13. Dispositif de positionnement selon l'une quelconque des revendications 7 à 12, caractérisé en ce que l'induit est formé de plusieurs bobinages montés en série ménagés en couches axialement superposées, électriquement isolées les unes des autres, l'entrée de chaque bobinage étant toutefois connectée à la sortie du bobinage précédent, et les faisceaux des bobinages, dont les brins sont parcourus à tout instant par des courants de même sens radial, étant superposés axialement.

14. Dispositif de positionnement selon la revendication 13, caractérisé en ce que l'induit est formé de 2 à 10 couches de bobinages.

15. Dispositif de positionnement selon l'une quelconque des revendications 7 à 14, caractérisé en ce que les bobinages sont des pistes de circuits imprimés.

16. Dispositif de positionnement selon l'une quelconque des revendications 1 à 15, caractérisé en ce que le corps tournant est commandé en rotation à l'intérieur d'un débattement angulaire inférieur à 180° par un moteur (8) de commande en débattement angulaire comportant un induit (31) ayant globalement la forme d'un disque plat tournant par rapport à un inducteur (30) formé d'au moins une paire d'armatures magnétiques (32, 33) circonférentiellement disjoints coiffant sans contact la périphérie radialement externe de ce disque et présentant sur des secteurs angulaires disjoints deux rebords formant des saillies axiales axialement en regard au travers du disque, au moins une portion de couronne à aimantation permanente (34, 35) coplanaire à l'axe étant ménagée dans chaque armature en sorte de générer un flux magnétique se refermant axialement entre les rebords au travers de l'induit, cet induit (31) comportant au moins un bobinage plan (36), avec une entrée (E) et une sortie (S), formé de deux brins en arc de cercle (36A) concentriques et centrés sur l'axe et de brins radiaux (36B) raccordant les brins en arc de cercle (36A) en sorte de former au moins une paire d'ensembles montés en série de spires en forme de banane emboîtées les unes dans les autres mais raccordées en série, les brins radiaux (36B) de chaque bobinage étant regroupés en au moins une paire de faisceaux de brins adjacents mais disjoints tels que, lorsqu'un courant est appliqué entre l'entrée (E) et la sortie (S) du bobinage (36), tous les brins radiaux d'un même faisceau soient parcourus par des courants de même sens radial, chacun des faisceaux étant disposé axialement entre les rebords d'une armature respective, le sens axial du flux traversant l'induit entre les rebords de chaque armature étant choisi en sorte que, lorsqu'un courant est appliqué entre l'entrée (E) et la sortie (S) du bobinage (36), l'interaction entre les courants circulant dans les brins des faisceaux avec les flux magnétiques axiaux génèrent sur l'induit (31) des couples de même sens, l'amplitude angulaire du débattement étant définie par la différence entre les amplitudes angulaires des paires de rebords et des faisceaux de brins radiaux.

17. Dispositif de positionnement selon la revendication 16 et la revendication 7, caractérisé en ce que le moteur (8) commandant en débattement le corps tournant et le moteur (71) commandant en débattement la bague ont des armatures communes avec, entre les induits des deux moteurs et entre les rebords des armatures commune, des pièces magnétiques fixes partiellement annulaires (72) isolées magnétiquement vis à vis de la partie statorique (2).

18. Dispositif de positionnement selon l'une quelconque des revendications 1 à 15, caractérisé en ce que le corps tournant est commandé en rotation à l'intérieur d'un débattement angulaire inférieur à 180° autour d'un axe X-X par un moteur (8') de commande en débattement angulaire comportant un inducteur lie à l'arbre, et un induit fixe (30'), tel que :
- l'inducteur comporte un barreau central (31') allongé selon ledit axe et une portion tubulaire ferromagnétique (32') s'étendant circonférentiellement tout autour de ce barreau central (31') radialement à distance de celui-ci, ce barreau central (31') comportant deux portions d'un même cylindre (33A', 33B') diamétralement opposées et d'axes confondus avec l'axe donné, d'amplitudes angulaires sensiblement égales inférieures à 180°, et séparées par deux méplats longitudinaux (34A', 34B') globalement parallèles, ainsi qu'un barreau central à aimantation permanente (35') disposé suivant l'axe donné et de sens d'aimantation orienté sensiblement parallèlement aux méplats, et
- l'induit (30') est un élément tubulaire interposé radialement entre le barreau central (31') et la portion tubulaire ferromagnétique (32') et comportant au moins un bobinage (36') ayant une entrée (E') et une sortie (S') et comportant des brins longitudinaux parallèles disjoints (36A') raccordés par des brins (36B') disposés transversalement à l'axe donné, ces brins longitudinaux étant répartis en deux faisceaux (F1', F2') diamétralement opposés, tous les brins d'un faisceau étant, lorsqu'un courant est appliqué entre l'entrée (E') et la sortie (S') du bobinage (36'), parcourus par des courants de même sens, chaque faisceau étant en regard de l'une, respective, des portions de cylindre, et ledit débattement angulaire donné étant inférieur à la différence entre les amplitudes angulaires des portions de cylindre et des faisceaux.

19. Dispositif de positionnement selon la revendication 18, caractérisé en ce que les patins de serrage (61) s'appliquent sur la portion tubulaire ferromagnétique (32') de l'inducteur.

20. Dispositif de positionnement selon l'une quelconque des revendications 1 à 19, caractérisé en ce que ce dispositif de verrouillage (10') est disposé axialement entre deux paliers magnétiques (7',7") à deux axes transversaux asservis.

21. Dispositif de positionnement selon la revendication 20, caractérisé en ce que chaque palier magnétique (7', 7") comporte une couronne polaire ferromagnétique (20) portée par l'arbre et, autour de cette couronne, portées par le stator, une couronne à aimantation permanente axiale (23), deux paires de noyaux axiaux (27) entourés de bobines, et deux plaques polaires (25, 26) enserrant cette couronne à aimantation permanente et ces paires de noyaux.

22. Dispositif de positionnement selon l'une quelconque des revendications 1 à 20, caractérisé en ce que ce palier magnétique est à deux axes transversaux asservis et comporte une couronne annulaire (20) à aimantation permanente axiale prise entre deux pièces annulaires polaires (21, 22) et liée à l'arbre et, radialement de part et d'autre de cette couronne, deux paires de bobines (28) entourant des moyaux axiaux (27) pris entre des plaques polaires (25, 26), et une couronne (23) de fermeture de flux magnétique.

23. Dispositif de positionnement selon la revendication 22, caractérisé en ce que ce dispositif comporte un dispositif de commande en basculement comportant une pluralité de bobines (50, 28) adaptées à appliquer à l'arbre un couple transversal à l'axe de rotation (X-X).

24. Dispositif de positionnement selon la revendication 23, caractérisé en ce que les bobines (50) de cette pluralité de bobines sont disposées autour de noyaux (51) disposés au moins approximativement axialement en regard d'une partie rotorique liée à l'arbre, de part et d'autre à la fois de cette portion et de l'axe de rotation de cet arbre.

25. Dispositif de positionnement selon la revendication 22, caractérisé en ce qu'il comporte un dispositif de commande en basculement comportant l'une des paires de bobines du palier, et un bloc de commande (11A) adapté à décaler la position radiale de consigne de l'arbre transversalement à l'axe de rotation (X-X).

26. Dispositif de positionnement selon l'une quelconque des revendications 1 à 25, caractérisé en ce que l'arbre comporte des butées axiales adaptées à venir axialement en regard des patins de serrage dans la configuration de verrouillage, grâce à quoi cet arbre est maintenu axialement dans ladite configuration de verrouillage.

## Patentansprüche

1. Positionierungsvorrichtung (1) für einen sich drehenden Körper (4), der in bezug auf einen Statorkörper (2) um eine Achse (X-X) beweglich ist, aufweisend ein Magnetlager (7) und eine Verriegelungs-/Entriegelungsvorrichtung (10), dadurch gekennzeichnet, daß diese Verriegelungs-/Entriegelungsvorrichtung (10) eine Vielzahl von Klemmen (60) aufweist, die mit Sperrschuhen (61) versehen sind, welche dafür ausgelegt sind, radial auf einer Welle (5) des sich drehenden Körpers (4) zum Aufliegen zu kommen, wobei diese Klemmen (60) auf dem Statorkörper (2) um axiale Stifte (63) herum gelenkig gelagert sind, die in einem Abstand von der Rotationsachse gelegen sind und um diese Rotationsachse (X-X) in regelmäßigen Winkelabständen verteilt sind, so daß sie um diese axialen Stifte (63) herum unter der Einwirkung eines beweglichen Betätigungsteils (65) zwischen einer Entriegelungskonfiguration, in der sich die Sperrschuhe (61) in einem maximalen Abstand von der Achse befinden, und einer Verriegelungskonfiguration, in der sich diese Schuhe (61) in einem minimalen, zum Bewirken einer radialen Sperrung der Welle (5) geeigneten Abstand von der Achse (X-X) befinden, eine Schwenkbewegung ausführen können.

2. Positionierungsvorrichtung nach Anspruch 1, dadurch gekennzeichnet, daß das Betätigungsteil (65) ein ringförmiger Reif ist, der auf die Achse zentriert ist, wobei er einen vorgegebenen Winkelausschlag und ebenso viele axiale Ansätze (68) aufweist, wie es Klemmen gibt, wobei jede Klemme eine Umfangsöffnung (67) aufweist, die von einem der Ansätze (68) durchquert wird, wobei die radial inneren und äußeren Ränder (69, 70) dieser Öffnung Rampen für die Ansätze bilden, wobei diese Öffnung ein erstes umfangseitiges Ende (69), das in einem minimalen Abstand von der Rotationsachse gelegen ist, und ein zweites umfangsseitiges Ende (70) aufweist, das in einem maximalen Abstand von der Rotationsachse gelegen ist, wodurch sich die Klemmen, wenn sich die Ansätze des Reifs in den ersten umfangsseitigen Enden der Öffnungen befinden, in ihren Entriegelungskonfigurationen befinden, und wenn sich die Ansätze des Reifs in den zweiten umfangsseitigen Enden der Öffnungen befinden, befinden sich die Klemmen in ihren Verriegelungskonfiguarationen.

3. Postitionierungsvorrichtung nach Anspruch 2, dadurch gekennzeichnet, daß jeder der axialen Ansätze (68) mit Rollen (68A) versehen ist, die dafür ausgelegt sind, auf den radial inneren oder äußeren Rändern (67,67') der Umfangsöffnungen zu rollen.

4. Positionierungsvorrichtung nach Anspruch 2 oder Anspruch 3, dadurch gekennzeichnet, daß die Sperrschuhe (61) durch elastische Elemente (75), die auf den Reif (65) wirken, radial gegen die Achse vorgespannt sind.

5. Positionierungsvorrichtung nach einem der Ansprüche 2 bis 4, dadurch gekennzeichnet, daß der Betätigungsreif (65) durch eine Vielzahl elastischer Elemente (75), die in ihrer Gesamtheit radial sind, zur Kompression wirken und in einer zur Achse transversalen Ebene beiderseits einer instabilen Konfiguration, in der sie radial ausgerichtet sind, zwischen zwei stabilen Endkonfigurationen, bei denen sich die Klemmen jeweils in ihrer Ver- oder Entrieglungskonfiguration befinden, beweglich sind, mit einem Statorabschnitt verbunden ist.

6. Postitionierungsvorrichtung nach einem der Ansprüche 2 bis 5, dadurch gekennzeichnet, daß der Reif (65) von einem Drehmomentmotor (71), welcher einen mit dem Reif (65) einstückigen Läufer und einen mit dem Statorkörper (2) verbundenen Induktor (72) aufweist, zum winkeligen Ausschlag angetrieben wird.

7. Positionierungsvorrichtung nach Anspruch 6, dadurch gekennzeichnet, daß der Läufer (31) allgemein die Form einer ebenen Scheibe aufweist und der Induktor aus mindestens einem Paar umfangsseitig getrennter Magnetanker (32, 33) gebildet ist, die den radial äußeren Umfang dieser Scheibe ohne Kontakt bestreichen und auf getrennten Winkelsektoren zwei Leisten aufweisen, die axiale Auskragungen bilden, welche sich durch die Scheibe hindurch axial gegenüberstehen, wobei mindestens ein koplanar zur Achse permanent magnetisierter Einfassungsabschnitt (34, 34A, 35, 35A) in jedem Anker vorgesehen ist, so daß ein magnetischer Fluß erzeugt wird, der sich axial zwischen den Leisten durch den Läufer hindurch schließt, wobei dieser Läufer mindestens eine ebene Wicklung (36) mit einem Eingang (E) und einem Ausgang (S) aufweist, die aus kreisbogenförmigen Strängen (36A), welche konzentrisch und auf die Achse zentriert sind, und aus radialen Strängen (36B) gebildet ist, die die kreisbogenförmigen Stränge so verbinden, daß mindestens eine Gruppe bananenförmiger Windungen gebildet wird, die ineinander eingesetzt, jedoch in Serie geschaltet sind, wobei die radialen Stränge (36B) jeder Wicklung (36) in mindestens ein Paar Bündel aufgeteilt sind, die aus benachbarten, jedoch getrennten Strängen gebildet sind, so daß, wenn ein Strom zwischen dem Eingang (E) und dem Ausgang (S) der Wicklung (36) angelegt wird, alle radialen Stränge (36B) eines selben Bündels von Strömen der gleichen radialen Richtung durchlaufen werden, wobei jedes der Bündel axial zwischen den Leisten eines jeweiligen Ankers angeordnet ist, wobei die axiale Richtung des Flusses, der den Läufer zwischen den Leisten jedes Ankers kreuzt, so ausgewählt ist, daß, wenn ein Strom zwischen dem Eingang (E) und dem Ausgang (S) der Wicklung (36) angelegt wird, die Wechselwirkung zwischen den Strömen, die in den Strängen der Bündel kreisen, und den axialen Magnetflüssen auf dem Läufer (31) Drehmomente derselben Richtung erzeugt, wobei die Winkelamplitude des Ausschlags durch die Differenz zwischen den Winkelamplituden der Leistenpaare und der Bündel der radialen Stränge definiert ist.

8. Positionierungsvorrichtung nach Anspruch 7, dadurch gekennzeichnet, daß der permanent magnetisierte Einfassungsabschnitt jedes Ankers eine der Leisten dieses Ankers bildet, wobei dieser Einfassungsabschnitt in Axialrichtung permanent magnetisiert ist.

9. Postitionierungsvorrichtung nach Anspruch 8, dadurch gekennzeichnet, daß jede Leiste jedes Ankers von einem in Axialrichtung permanent magnetisierten Einfassungsabschnitt (34, 34A, 35, 35A) gebildet wird.

10. Positionierungsvorrichtung nach einem der Ansprüche 7 bis 9, dadurch gekennzeichnet, daß dieser Motor ein einziges Paar einander diametral gegenüberliegender Anker und ein einziges Paar einander diametral gegenüberliegender Bündel pro Wicklung aufweist.

11. Positionierungsvorrichtung nach Anspruch 10, dadurch gekennzeichnet, daß die Winkelamplitude jedes Ankers zwischen 90° und 170° beträgt.

12. Postitionierungsvorrichtung nach Anspruch 10 oder Anspruch 11, dadurch gekennzeichnet, daß die Winkelamplitude jedes Bündels kleiner als etwa 30° ist.

13. Positionierungsvorrichtung nach einem der Ansprüche 7 bis 12, dadurch gekennzeichnet, daß der Läufer aus mehreren Wicklungen gebildet ist, die in Serie geschaltet sind und in axial übereinandergeschichteten Lagen, die elektrisch gegeneinander isoliert sind, ausgebildet sind, wobei der Eingang jeder Wicklung in jedem Fall mit dem Ausgang der vorhergehenden Wicklung verbunden ist und wobei die Bündel der Wicklungen, deren Stränge zu jedem Zeitpunkt von Strömen derselben radialen Richtung durchlaufen werden, axial übereinandergeschichtet sind.

14. Positionierungsvorrichtung nach Anspruch 13, dadurch gekennzeichnet, daß der Läufer aus 2 bis 10 Wicklungslagen gebildet wird.

15. Positionierungsvorrichtung nach einem der Ansprüche 7 bis 14, dadurch gekennzeichnet, daß die Wicklungen Bahnen gedruckter Schaltungen sind.

16. Positionierungsvorrichtung nach einem der Ansprüche 1 bis 15, dadurch gekennzeichnet, daß der sich drehende Körper zur Rotation innerhalb eines Winkelausschlags von weniger als 180° durch einen Motor (8) zur Steuerung des Winkelausschlags gesteuert wird, welcher einen Läufer (31) aufweist, der im wesentlichen die Form einer ebenen Scheibe aufweist, die sich in bezug auf einen Induktor (30) dreht, welcher aus mindestens einem Paar umfangsseitig getrennter Magnetanker (32, 33) gebildet ist, die den radial äußeren Umfang dieser Scheibe ohne Kontakt bestreichen und auf getrennten Winkelsektoren zwei Leisten aufweisen, die axiale Auskragungen bilden, welche sich durch die Scheibe hindurch axial gegenüberstehen, wobei mindestens ein koplanar zur Achse permanent magnetisierter Einfassungsabschnitt (34, 35) in jedem Anker vorgesehen ist, so daß ein Magnetfluß erzeugt wird, der sich axial zwischen den Leisten durch den Läufer hindurch schließt, wobei dieser Läufer (31) mindestens eine ebene Wicklung (36) mit einem Eingang (E) und einem Ausgang (S) aufweist, die aus zwei kreisbogenförmigen Strängen (36A), die konzentrisch und auf die Achse zentriert sind, und aus radialen Strängen (36B) gebildet ist, die die kreisbogenförmige Stränge (36A) so verbinden, daß mindestens ein Paar in Serie geschalteter bananenförmiger Windungseinheiten gebildet wird, die ineinander eingesetzt, jedoch in Serie geschaltet sind, wobei die radiale Stränge (36B) jeder Wicklung in mindestens ein Paar Bündel benachbarter, jedoch getrennter Stränge aufgeteilt sind, so daß, wenn ein Strom zwischen dem Eingang (E) und dem Ausgang (S) der Wicklung (36) angelegt wird, alle radialen Stränge eines selben Bündels von Strömen der gleichen radialen Richtung durchlaufen werden, wobei jedes der Bündel axial zwischen den Leisten eines jeweiligen Ankers angeordnet ist, wobei die axiale Richtung des Flusses, der den Läufer zwischen den Leisten jedes Ankers kreuzt, so ausgewählt ist, daß, wenn ein Strom zwischen dem Eingang (E) und dem Ausgang (S) der Wicklung (36) angelegt wird, die Wechselwirkung zwischen den Strömen, die in den Strängen der Bündel kreisen, und den axialen Magnetflüssen auf dem Läufer (31) Drehmomente derselben Richtung erzeugt, wobei die Winkelamplitude des Ausschlags durch die Differenz zwischen den Winkelamplituden der Leistenpaare und der Bündel der radialen Stränge definiert ist.

17. Positionierungsvorrichtung nach Anspruch 16 und Anspruch 7, dadurch gekennzeichnet, daß der Motor (8), der den Ausschlag des sich drehenden Körpers steuert, und der Motor (71), der den Ausschlag des Reifs steuert, gemeinsame Anker mit ortsfesten Magnetteilen zwischen den Läufern der beiden Motoren und zwischen den Leisten der gemeinsamen Anker aufweisen, die teilweise ringförmig (72) sind und vom Statorteil (2) magnetisch isoliert sind.

18. Positionierungsvorrichtung nach einem der Ansprüche 1 bis 15, dadurch gekennzeichnet, daß der sich drehende Körper zur Rotation innerhalb eines Winkelausschlags von weniger als 180° um eine Achse X-X durch einen Motor (8') zur Steuerung des Winkelausschlags gesteuert wird, der einen mit der Welle verbundenen Induktor und einen ortsfesten Läufer (30') aufweist, wobei:
- der Induktor einen zentralen Stab (31'), der gemäß der Achse langgestreckt ist, und einen röhrenförmigen ferromagnetischen Abschnitt (32') aufweist, der sich umfangsseitig in einem radialen Abstand von diesem zentralen Stab (31') um diesen herum erstreckt, wobei dieser zentrale Stab (31') zwei Abschnitte eines selben Zylinders (33A',33B'), die einander diametral gegenüberliegen und deren Achsen mit der vorgegebenen Achse zusammenfallen, deren Winkelamplituden im wesentlichen gleich und kleiner 180° sind und die durch zwei longitudinale Platten (34A', 34B'), die im wesentlichen parallel sind, getrennt sind, sowie einen zentralen permanent magnetisierten Stab (35') aufweist, der entlang der vorgegebenen Achse angeordnet ist und dessen Magnetisierungsrichtung im wesentlichen parallel zu den Platten verläuft, und
- der Läufer (30') ein röhrenförmiges Element ist, das radial zwischen den zentralen Stab (31') und den röhrenförmigen ferromagnetischen Abschnitt (32') gesetzt ist und mindestens eine Wicklung (36') mit einem Eingang (E') und einem Ausgang (S') aufweist, die longitudinale, getrennte, parallele Stränge (36A') aufweist, die durch Stränge (36B') verbunden sind, welche transversal zur vorgegebenen Achse angeordnet sind, wobei diese longitudinalen Stränge in zwei einander diametral gegenüberliegende Bündel (F1', F2') aufgeteilt sind, wobei alle Stränge eines Bündels, wenn ein Strom zwischen dem Eingang (E') und dem Ausgang (S') der Wicklung (36') angelegt wird, von Strömen der gleichen Richtung durchlaufen werden, wobei jedes Bündel einem jeweiligen Zylinderabschnitt gegenüberliegt und wobei der Winkelausschlag kleiner als die Differenz zwischen den Winkelamplituden der Zylinderabschnitte und der Bündel ist.

19. Positionierungsvorrichtung nach Anspruch 18, dadurch gekennzeichnet, daß die Sperrschuhe (61) auf dem röhrenförmigen ferromagnetischen Abschnitt (32') des Induktors aufliegen.

20. Positionierungsvorrichtung nach einem der Ansprüche 1 bis 19, dadurch gekennzeichnet, daß diese Verriegelungsvorrichtung (10') axial zwischen zwei Magnetlagern (7', 7") mit zwei transversalen Regelungsachsen angeordnet ist.

21. Postitionierungsvorrichtung nach Anspruch 20, dadurch gekennzeichnet, daß jedes Magnetlager (7', 7") eine polare ferromagnetische Einfassung (20'), die von der Welle getragen wird, und, um diese Einfassung, vom Stator getragen, eine in Axialrichtung permanent magnetisierte Einfassung (23'), zwei Paar axialer Kerne (27), die von Spulen umgeben sind, und zwei polare Platten (25, 26) aufweist, die diese permanent magnetisierte Einfassung und diese Kernpaare umschließen.

22. Positionierungsvorrichtung nach einem der Ansprüche 1 bis 20, dadurch gekennzeichnet, daß dieses Magnetlager zwei transversale Regelungsachsen, und eine ringförmige, in Axialrichtung permanent magnetisierte Einfassung (20), die zwischen zwei ringförmigen polaren Teilen (21, 22) eingebettet ist und mit der Welle verbunden ist, und, radial zu beiden Seiten dieser Einfassung, zwei Spulenpaare (28), die axiale Kerne (27) umgeben, welche zwischen polaren Platten (25, 26) eingebettet sind, und eine Einfassung (23) zum Schließen des magnetischen Flusses aufweist.

23. Positionierungsvorrichtung nach Anspruch 22, dadurch gekennzeichnet, daß diese Vorrichtung eine Vorrichtung für die Steuerung eines Kippens aufweist, die eine Vielzahl von Spulen (50, 28) aufweist, welche dafür ausgelegt sind, an die Welle transversal zur Rotationsachse (X-X) ein Drehmoment anzulegen.

24. Positionierungsvorrichtung nach Anspruch 23, dadurch gekennzeichnet, daß die Spulen (50) dieser Vielzahl von Spulen um Kerne (51) herum angeordnet sind, die zumindest näherungsweise axial gegenüber einem mit der Welle verbundenen Rotorteil, gleichzeitig zu beiden Seiten dieses Abschnitts und der Rotationsachse dieser Welle angeordnet sind.

25. Positionierungsvorrichtung nach Anspruch 22, dadurch gekennzeichnet, daß sie eine Vorrichtung für die Steuerung des Kippens, die eines der Spulenpaare des Lagers aufweist, und einen Steuerungsblock (llA) aufweist, der dafür ausgelegt ist, die radiale Einstellposition der Welle transversal zur Rotationsachse (X-X) zu verschieben.

26. Positionierungsvorrichtung nach einem der Ansprüche 1 bis 25, dadurch gekennzeichnet, daß die Welle axiale Anschläge aufweist, die dafür ausgelegt sind, in der Verriegelunqskonfiguration in eine Position axial gegenüber den Sperrschuhen zu gelangen, wodurch diese Welle axial in der Verriegelungskonfiguaration gehalten wird.

## Claims

1. Device for positioning a body (4) rotating about an axis (X-X) relative to a stator body including a magnetic bearing (7) and a locking/unlocking device (10), characterized in that the locking/unlocking device (10) includes a plurality of clamps (60) having clamping shoes (61) adapted to bear radially on a shaft of the rotating body, these clamps being articulated to the stator body about axial pins (63) at a distance from the rotation axis and equi-angularly distributed around this rotation axis, pivoting around these axial pins due to the action of a mobile maneuvering member (65) between an unlocked configuration in which the clamping shoes are at a maximum distance from the axis and a locked configuration in which the shoes are at a minimal distance from the axis so that the shaft is clamped radially.

2. Positioning device according to claim 1 characterized in that the maneuvering member (65) is an annular ring concentric with the axis having a given angular displacement including as many axial pins (68) as there are clamps, each clamp including a circumferential slot (67) through which one of the pins (68) passes, the radially internal and external edges (69, 70) of this slot forming ramps for the pins, this slot having a first circumferential end (69) at a minimal distance from the rotation axis and a second circumferential end (70) at a maximal distance from the rotation axis whereby, when the pins on the ring are at the first circumferential extremities of the slots the clamps are in their unlock configuration and when the pins on the ring are at the second circumferential ends of the slots the clamps are in their locked configuration.

3. Positioning device according to claim 2 characterized in that the axial pins each have bearings (68A) adapted to roll on the radially internal or external edges of the circumferential slots.

4. Positioning device according to claim 2 or claim 3 characterized in that the clamp shoes are urged radially towards the axis by spring members (75) operating on the ring.

5. Positioning device according to any one of claims 2 to 4 characterized in that the maneuvering ring is linked to a stator portion by a plurality of globally radial spring members (75) operating in compression and mobile in a plane transverse to the axis to either side of an unstable configuration in which they are radially oriented between two stable extreme positions in which the clamps are respectively in their locked and unlocked configurations.

6. Positioning device according to any one of claims 2 to 5 characterized in that the ring is displaced angularly by a torque motor (71) having an armature fastened to the ring and a field assembly joined to the stator body (2).

7. Positioning device according to claim 6 characterized in that the armature (81) is globally in the shape of a flat disk and the field assembly is formed by at least one pair of circumferentially separated magnetic armatures (82, 83) capping without contacting the radially external periphery of this disk and having on separated angular sectors two flanges (84, 84A, 85, 85A, 72) forming axial projections facing each other through the disk, at least one portion of a permanently magnetized ring (84, 84A, 85, 85A) coplanar with the axis being formed in each armature to generate a magnetic flux closed axially between the flanges through the armature, this armature including at least one plane coil (86) with an input and an output formed by concentric circular arc strands (86A) concentric with the axis and radial strands (86B) connecting the circular arc strands to form at least one set of banana-shape turns nested in each other but connected in series, the radial strands (86B) of each coil being grouped into at least one pair of groups formed of adjacent strands but separated so that when current is applied between the input and the output of the coil all the radial strands of the same group carry current in the same radial direction, each group being disposed axially between the flanges of a respective armature, the axial direction of the flux through the armature between the flanges of each armature being chosen so that when current is supplied between the input and the output of the coil the interaction between the currents flowing in the strands of the groups and the axial magnetic fluxes generate on the armature torques in the same direction, the angular amplitude of angular displacement being defined by the difference between the angle subtended by the pairs of flanges and the angle subtended by the groups of radial strands.

8. Positioning device according to claim 7 characterized in that said permanently magnetized ring portion of each armature constitutes one flange of this armature, this ring portion being permanently magnetized in the axial direction.

9. Positioning device according to claim 8 characterized in that each flange of each armature is constituted by a ring portion (34, 34A, 35, 35A) permanently magnetized in the axial direction.

10. Positioning device according to any one of claims 7 to 9 characterized in that this motor includes a single pair of diametrally opposed armatures and a single pair of diametrally opposed groups per coil.

11. Positioning device according to claim 10 characterized in that the angle subtended by each armature is between 90° and 170°.

12. Positioning device according to claim 10 or claim 11 characterized in that the angle subtended by each group is less than approximately 30°.

13. Positioning device according to any one of claims 7 to 12 characterized in that the armature is formed of a plurality of coils connected in series formed in axially stacked layers electrically insulated from each other, the input of each coil being connected to the output of the preceding coil, and the groups of coils, the strands of which carry currents in the same radial direction at any given time, are axially stacked.

14. Positioning device according to claim 13 characterized in that the armature is formed of two to ten layers of coils.

15. Positioning device according to any one of claims 7 to 14 characterized in that the coils are printed circuit tracks.

16. Positioning device according to any one of claims 1 to 15 characterized in that the rotating body is rotated within an angular displacement of less than 180° by an angular displacement drive motor (8) including an armature (31) having globally the shape of a flat disk rotating relative to a field assembly (30) formed of at least one pair of circumferentially separated magnetic armatures capping without contacting the radially external periphery of this disk and having on separated angular sectors two flanges forming axial projections facing each other through the disk, at least one portion of permanently magnetized ring coplanar with the axis being formed in each armature to generate a magnetic flux closing axially between the flanges through the armature, this armature including at least one plane coil with an input and an output formed of two concentric circular arc strands concentric with the axis and radial strands connecting the circular arc strands to form at least one pair of assemblies connected in series of banana-shape turns nested in each other but connected in series, the radial strands of each coil being grouped into at least one pair of groups of adjacent but separated strands so that when current is applied between the input and the output of the coil all the radial strands in the same group carry current in the same radial direction, each group being disposed axially between the flanges of a respective armature, the axial direction of the flow through the armature between the flanges of each armature being chosen so that when current is applied between the input and the output of the coil interaction between the currents flowing in the strands of the groups and the axial magnetic fluxes generates on the armature torques in the same direction, the amplitude of the angular displacement being defined by the difference between the angle subtended by the pairs of flanges and the angle subtended by the groups of radial strands.

17. Positioning device according to claim 16 and claim 17 characterized in that the motor (8) rotating the rotating body and the motor (72) rotating the ring have common armatures with, between the armatures of the two motors and between the flanges of the common armatures, fixed magnetic partially annular parts (72) magnetically isolated from the stator part (2).

18. Positioning device according to any one of claims 1 to 15 characterized in that the rotating body is rotated within an angular displacement of less than 180° about an X-X axis by an angular displacement drive motor (8') including a field assembly connected to the shaft and a fixed armature such that:
- the field assembly includes a central bar (31') elongate along said axis and a ferromagnetic tubular portion (32') extending circumferentially all around this central bar at a radial distance therefrom, this central bar including two diametrally opposed portions of the same cylinder (33A', 33B') concentric with the given axis, subtending substantially the same angles less than 180° and separated by two longitudinal flats (34A', 34B') that are globally parallel and a permanently magnetized central bar (35') on the given axis and whose magnetization direction is substantially parallel to the flats, and
- the armature (30') is a tubular member interposed radially between the central bar and the ferromagnetic tubular portion and including at least one coil (36') having an input (E') and an output (S') and including separate parallel longitudinal strands (36A') connected by strands (36B') disposed transversely to the given axis, these longitudinal strands being divided into two diametrally opposed groups (F1', F2'), all the strands of a group carrying current in the same direction when current is applied between the input and the output of the coil, each group facing a respective cylinder portion and said given angular displacement being less than the difference between the angles subtended by the cylinder portions and by the groups.

19. Positioning device according to claim 18 characterized in that the clamp shoes are applied to the ferromagnetic tubular portion of the field assembly.

20. Positioning device according to any one of claims 1 to 19 characterized in that this locking device is disposed axially between two magnetic bearings with two transverse control axes.

21. Positioning device according to claim 20 characterized in that each magnetic bearing (7', 7") includes a ferromagnetic pole ring (20') carried by the shaft and, around this ring, carried by the stator, a ring (23') permanently magnetized in the axial direction, two pairs of axial cores (26') carrying coils, and two pole plates (24', 25) gripping this permanently magnetized ring and these pairs of cores.

22. Positioning device according to any one of claims 1 to 20 characterized in that this magnetic bearing has two transverse control axes and includes an annular ring (20) permanently magnetized in the axial direction gripped between two annular polepieces (21, 22) and linked to the shaft and, on either radial side of this ring, two pairs of coils (28) around axial cores (27) gripped between pole plates (25, 26) and a ring (23) to close the magnetic flux.

23. Positioning device according to claim 22 characterized in that this device includes a tilt control device including a plurality of coils (50, 28) adapted to apply to the shaft a torque transverse to the rotation axis (X-X).

24. Positioning device according to claim 23 characterized in that the coils (50) of this plurality of coils are disposed around cores (51) disposed at least approximately axially facing a rotor part linked to the shaft, on either side of this portion and the shaft rotation axis.

25. Positioning device according to claim 22 characterized in that it includes a tilt control device including one pair of coils of the bearing and control unit (llA) adapted to offset the radial set point position of the shaft transversally to the rotation axis (X-X).

26. Positioning device according to any one of claims 1 to 25 characterized in that the shaft includes axial thrust bearings adapted to face axially clamping shoes in the locked configuration whereby this shaft is held axially in said locked configuration.
